# EUROPEAN PATENT SPECIFICATION

(11) **EP 4 562 813 B1**
(45) Date of publication and mention of the grant of the patent: **21.10.2026**
(21) Application number: 22953332.8
(22) Date of filing: 29.07.2022
(51) Int. Cl.: H04L 9/32, H04L 9/08, H04L 9/40, H04L 9/06

(54) **STATELESS TOKEN REPLAY PROTECTION**
ZUSTANDSLOSER TOKEN-WIEDERGABESCHUTZ
PROTECTION CONTRE LA RELECTURE DE JETONS SANS ÉTAT

(43) Date of publication of application: 04.06.2025
(73) Proprietor: Visa International Service Association, San Francisco, California 94128 (US)
(72) Inventor: LE SAINT, Eric, San Francisco, California 94128 (US)
(74) Representative: EIP
(86) International application number: PCT/US2022/038913
(87) International publication number: WO 2024/025562

(56) References cited:
- US-A1- 2010 122 326
- US-A1- 2015 348 056
- US-A1- 2018 041 339
- US-A1- 2018 219 851
- US-A1- 2018 302 221
- US-A1- 2019 349 767
- US-A1- 2020 295 932
- US-A1- 2021 209 228
- US-A1- 2021 288 802

## Description

### BACKGROUND

A user may use a user device (e.g., mobile phone, computer, etc.) to send authentication data (e.g., username/password) to an authentication server to obtain authorization data (e.g., authorization token) for accessing a resource (e.g., a web service) for a valid period. The user can use the authorization data to access the resources multiple times as long as a verification server (e.g., an online portal authorization agent) can assess the authorization data validity. However, the authorization token is vulnerable against unintended replay since it can be used multiple times, e.g., if it was intercepted and reused by a bad actor. Prior art document US2010/122326A1 relates to methods for authenticating users of program objects in distributed computing environments based on negotiated security contexts.

Embodiments of the disclosure address this problem and other problems individually and collectively.

### SUMMARY

Aspects of the invention are set out in the accompanying claims. One embodiment of the invention can include a method accessing a resource. The method can comprise user device performing different sets of steps. The user device can transmit authentication data and an access request for a resource to an authentication server. An access to the resource can be obtained using an authorization token with a specified time (e.g., an authorization token validity time, a first timecode model issuance time, etc.). The user device can receive a first timecode model from the authentication server. The first timecode model can be generated using a first base seed. The user device can determine a first elapsed time using a current time of the user device and the specified time. The user device can then determine a first timecode using the first elapsed time and the first timecode model. Upon determining the first timecode, the user device can transmit the first timecode and the authorization token to a verification server. The user device can then receive the access to the resource based on the first timecode matching a second timecode generated by the verification server. The second timecode can be generated using a second timecode model and a second elapsed time. The second timecode model can be generated using a second base seed. The second elapsed time can be determined using the specified time and a current time of the verification server.

A better understanding of the nature and advantages of embodiments of the invention may be gained with reference to the following detailed description and accompanying drawings.

### BRIEF DESCRIPTION OF THE DRAWINGS

FIG. 1 shows a flow diagram of an embodiment using a timecode to protect against replay.
FIG. 2 shows a flow diagram of one variation of an embodiment using a timecode to protect against replay.
FIG. 3 shows a flow diagram of another variation of an embodiment using a timecode to protect against replay.
FIG. 4 shows a flow diagram of generating a timecode stream.
FIG. 5 shows a flow diagram of generating a timecode seed.
FIG. 6 shows a flow diagram of obtaining clock offsets.
FIG. 7 shows a flow diagram of obtaining latencies.
FIG. 8 shows a flow diagram of an embodiment using a timecode for verifying a transaction.
FIG. 9 shows a flow diagram of an alternative embodiment using a timecode as a dCVV for verifying a transaction.
FIG. 10 shows a flowchart corresponding to an embodiment.
FIG. 11 shows a block diagram of an example computer system usable with systems and methods according to embodiments of the present disclosure.

### TERMS

Prior to discussing embodiments of the disclosure, some terms can be described in further detail.

A "user" may include an individual. In some embodiments, the user may be a cardholder, account holder, or consumer.

A "user device" may be a device that is operated by a user. Examples of user devices may include a mobile phone, a smart phone, a card, a personal digital assistant (PDA), a laptop computer, a desktop computer, a server computer, a vehicle such as an automobile, a thin-client device, a tablet PC, etc. Additionally, user devices may be any type of wearable technology device, such as a watch, earpiece, glasses, etc. The user device may include one or more processors capable of processing user input. The user device may also include one or more input sensors for receiving user input. As is known in the art, there are a variety of input sensors capable of detecting user input, such as accelerometers, cameras, microphones, etc. The user input obtained by the input sensors may be from a variety of data input types, including, but not limited to, audio data, visual data, or biometric data. The user device may comprise any electronic device that may be operated by a user, which may also provide remote communication capabilities to a network. Examples of remote communication capabilities include using a mobile phone (wireless) network, wireless data network (e.g., 3G, 4G or similar networks), Wi-Fi, Wi-Max, or any other communication medium that may provide access to a network such as the Internet or a private network.

A "resource" generally refers to any asset that may be used or consumed. For example, the resource may be computer resource (e.g., stored data or a networked computer account), a physical resource (e.g., a tangible object or a physical location, such as a building), or other electronic resource or communication between computers (e.g., a communication signal corresponding to an account for performing a transaction). Some nonlimiting examples of a resource may include a good or service, a physical building, a computer account or file, or a payment account. In some embodiments, a resource may refer to a financial product, such as a loan or line of credit.

A "resource provider" may be an entity that can provide a resource such as goods, services, information, and/or access. Examples of resource providers includes merchants, data providers, transit agencies, governmental entities, venue and dwelling operators, etc. A "merchant" may typically be an entity that engages in transactions and can sell goods or services, or provide access to goods or services.

A "digital wallet" can include an electronic device that allows an individual to conduct electronic commerce transactions. A digital wallet may store user profile information, payment credentials, bank account information, one or more digital wallet identifiers and/or the like and can be used in a variety of transactions, such as but not limited to eCommerce, social networks, money transfer/ personal payments, mobile commerce, proximity payments, gaming, and/or the like for retail purchases, digital goods purchases, utility payments, purchasing games or gaming credits from gaming websites, transferring funds between users, and/or the like. A digital wallet may be designed to streamline the purchase and payment process. A digital wallet may allow the user to load one or more payment cards onto the digital wallet so as to make a payment without having to enter an account number or present a physical card. A digital wallet may be a transfer application.

A "credential" may be any suitable information that serves as reliable evidence of worth, ownership, identity, or authority. A credential may be a string of numbers, letters, or any other suitable characters, as well as any object or document that can serve as confirmation. Examples of credentials include value credentials, identification cards, certified documents, access cards, passcodes and other login information, etc.

A "token" may be a substitute value for a credential. A token may be a string of numbers, letters, or any other suitable characters. Examples of tokens include payment tokens, access tokens, personal identification tokens, etc.

A "payment token" or an "authorization token" may include an identifier for a payment account that is a substitute for an account identifier, such as a primary account number (PAN). For example, a payment token may include a series of alphanumeric characters that may be used as a substitute for an original account identifier. For example, a token "4900 0000 0000 0001" may be used in place of a PAN "4147 0900 0000 1234." In some embodiments, a payment token may be "format preserving" and may have a numeric format that conforms to the account identifiers used in existing transaction processing networks (e.g., ISO 8583 financial transaction message format). In some embodiments, a payment token may be used in place of a PAN to initiate, authorize, settle or resolve a payment transaction or represent the original credential in other systems where the original credential would typically be provided. In some embodiments, a payment token may be generated such that the recovery of the original PAN or other account identifier from the token value may not be computationally derived. Further, in some embodiments, the token format may be configured to allow the entity receiving the token to identify it as a token and recognize the entity that issued the token.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may comprise one or more computational apparatuses and may use any of a variety of computing structures, arrangements, and compilations for servicing the requests from one or more client computers.

The term "public/private key pair" may include a pair of linked cryptographic keys generated by an entity (e.g., a computing device or an electronic device). The public key may be used for public functions such as encrypting a message to send to the entity or for verifying a digital signature which was supposedly made by the entity. The private key, on the other hand may be used for private functions such as decrypting a received message or applying a digital signature. The public key will usually be authorized by a body known as a Certification Authority (CA) cryptographically sign the binding between the public key and the identity possessing the private key, and some private key usage policy. The private key will typically be kept in a secure storage medium and will usually only be known to the entity. However, the cryptographic systems described herein may feature key recovery mechanisms for recovering lost keys and avoiding data loss. Public and private keys may be in any suitable format, including those based on elliptic curve cryptography (ECC), lattice or code based cryptosystems such as McEliece or learning with errors (LWE) which may be post-quantum secure.

### DETAILED DESCRIPTION

A user may want to access web services, such as a payment account or an online portal. A merchant or the online portal generally does not want to store payment information or personal passwords, as there are liability and resources that need to be expended. In such an instance, an authentication server can authenticate the user and then verify if the user is registered or authorized to access the web services. Upon successful authentication, the authentication server may then send an authorization data to the user. The user may reuse the authorization data (e.g., an authorization token) to access the web services multiple times as long as a verification server can assess the validity of the authorization data.

More generally, a user device may send authentication data such as username/password, Single-sign-on token (SAML token, OIDC token, etc.), public key, etc. to an authentication server to obtain the authorization data (e.g., authorization token) for accessing a resource (e.g., a web cookie for accessing web services, or tokenized PAN for payment services) for a valid period. However, the authorization data is vulnerable against replay since anyone can use it, e.g., if it was intercepted. The authorization data can be captured and reused during the validity period, and the solutions for anti-replay of authorization data are oftentimes very complex and unpractical.

Embodiments can solve this problem by generating and adding a timecode along with the authorization token to protect it against replay in a simple, practical manner that limits the use of the token from an authenticated context during brief windows of time. A user device can send authentication data such as username/password, single-sign-on token, device certificate, public key, etc., and an access request to an authentication server. The access request may include an authorization token. The authentication server may then validate the authentication data and may verify or generate the authorization token and also generate a first timecode model (e.g., timecode stream or timecode seed). To allow for stateless implementation on both the authentication server and verification server, the first timecode model can be generated from a base seed that is independent from a user or the authorization token and that is shared with the verification server. In some embodiments, the first timecode model can be generated using other data such as the authorization token in addition to the base seed. To protect to timecode model from exposure, the authentication server may encrypt and authenticate the first timecode model using the public key of the authentication data or encryption keys cryptographically derived from that public key. After encrypting the first timecode model, the authentication server may transmit both encrypted first timecode model and the authorization token to the user device.

The user device can calculate a time difference between a current time (time in which the user is sending out the authorization token) of the user device and a specified time (e.g. authorization token issuance time, first timecode model issuance time, etc.) to determine a first elapsed time. The first timecode model can be decrypted with a private key of the user device or a private key of a separate enclave or device controlled by the user. The first elapsed time and the first timecode model can then be used to generate a first timecode. The first timecode and the authorization token can then be sent to the verification server to check whether the first timecode generated by the user device is valid.

The verification server can generate a second timecode model from the base seed using the same method as the authentication server. In some embodiments, the second timecode model can be generated using other data such as the authorization token in addition to the base seed. The verification server can calculate the time difference between the current time (time in which the verification server received the authorization token) of the user device and the specified time (e.g. authorization token issuance time, first timecode model issuance time, etc.) to determine a second elapsed time. The second elapsed time and the second timecode model can then be used to generate a second timecode. The second timecode can then be compared with the first timecode to see if they match, and upon a successful match, the verification server can grant an access to the user device.

### I. USE OF A TOKEN TO ACCESS A RESOURCE

A user can access a resource (e.g., a merchant's web service) using a user device (e.g., a mobile phone). The user device may need to verify the user's identity to continue an action (e.g., performing a transaction or accessing a web service, such as a media streaming service) in the resource. The user device can provide authentication data such as username, password, etc. to an authentication server, i.e., a resource's authorizing agent, for an authentication. For example, when performing a transaction, a user may need to provide an authentication data such as a payment card number, a card verification value (CVV), an expiration date, etc. The user device can then send the authentication data to an authentication server (e.g., an issuer bank) that can verify the authentication data. In some embodiments, the user device can send previously issued authorization token to the authentication sever.

The authentication server can authenticate the user by reviewing the authentication data. Upon a successful review, the authentication server can provide authorization data (e.g., an authorization token) to the user or the user device. In some embodiments, the authentication server may verify the authorization data. The user device can use the authorization data to receive an access to continue with performing an action in the resource. The authorization data can be valid for up to a certain period of time (e.g., four hours), and expire after. When the authorization data expires, the user device would need to provide authentication data to the authentication server again to obtain a new authorization data. A verification server can verify the authorization data and give the access to the user device. The action can be performed multiple times in the resource, as long as the verification service can verify the authorization data.

During the period of time in which the authorization data is valid, an adversity can perform a replay attack by capturing the authorization data and reusing it. For example, the adversity can capture the data when the user device sends the authorization data to the verification server for a verification. The adversity can then receive an access to perform an action in the resource by using the user's authorizing data during the time the authorization data is valid for.

### II. TIMECODE FOR REPLAY PROTECTION

An authorization data (e.g. Authorization Token) can be captured and reused for an unauthorized purpose or context during the validity period by an adversity. Current anti-replay solutions are complex and unpractical or require a cryptographically protected data exchange protocol. For example, conditional access anti-replay solution requires supplementary context or behavior control services to protect against replay. However, any authorization data can be associated with an authentication timecode, which may provide authentication guarantees, is valid during a short period of time, and is non-predictable, i.e., it can be stolen but not replayed outside of the short time period. Therefore, a timecode can be associated with the authorization data to protect it against a replay attack.

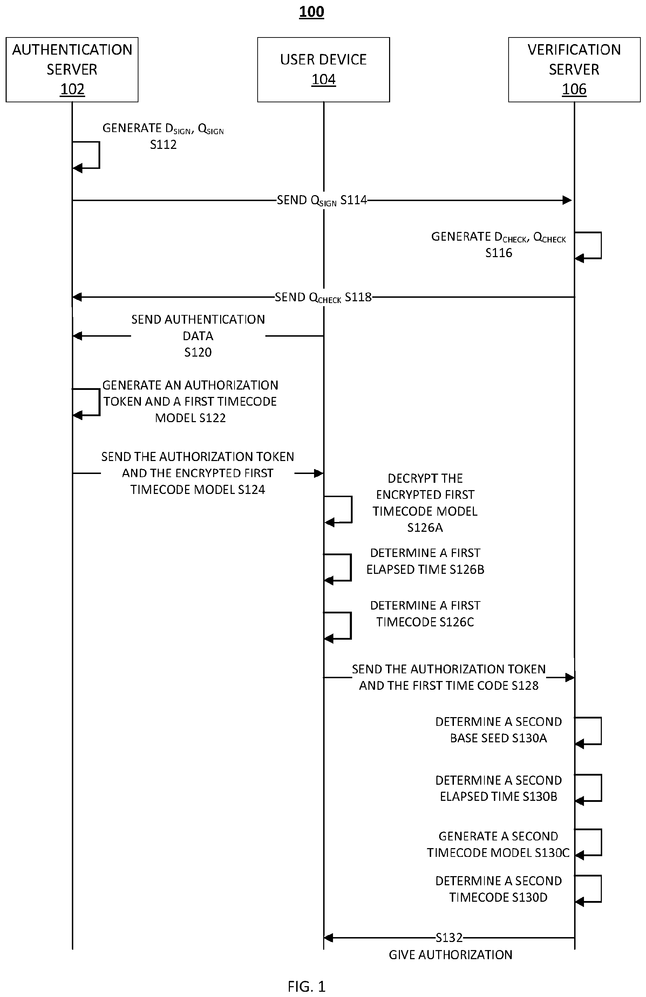

FIG. 1 shows an embodiment using a timecode to protect against a replay attack. FIG. 1 comprises an authentication server 102, a user device 104, and a verification server 106. The authentication server 102 and the verification server 106 in steps S112 to S118 are exchanging keys necessary to generate base seeds.

In step S112, the authentication server 102 can generate a private, public signing key pair (d_{sign}, Q_{sign}). The private signing key (d_{sign}) can be generated using a key derivation function (KDF) with inputs of a pseudorandom number generator (PRNG), a unique ID of the authentication server 102, and/or context parameters (e.g., IP address, Mac Address, device fingerprint, etc.). The key derivation function (KDF) can use the pseudo-random number generator on the unique ID and/or the context parameters to generate the private signing key (d_{sign}). The public signing key (Q_{sign}) can be generated by using an elliptic curve (G) and the private signing key (d_{sign}). The private, public signing key pair can be generated by using other one-way cryptographic algorithms. The cryptographic algorithms can use a random number generator or a pseudo-random number generator (e.g., cryptographic hash function, block cipher, etc.) to derive the private, public signing key pair.

In step S114, the authentication server 102 can send the public signing key (Q_{sign}) to the verification server 106.

In step S116, the verification server 106 can generate a private, public check key pair (d_{check}, Q_{check}). The private check key (d_{check}) can be generated using a key derivation function (KDF) with inputs of a pseudo random number generator (PRNG), a unique ID of the verification server 106, and/or context parameters. The key derivation function (KDF) can use the pseudo-random number generator on the unique ID and/or the context parameters to generate the private signing key (d_{sign}). The public check key (Q_{check}) can be generated by using an elliptic curve (G) and the private check key (d_{check}). The private, public check key pair can be generated by using other one-way cryptographic algorithms. The cryptographic algorithms can use a random number generator or a pseudo-random number generator (e.g., cryptographic hash function, block cipher, etc.) to derive the private, public check key pair.

In step S118, once the private, public check key pair is generated by the verification server 106, the verification server 106 can send the public check key (Q_{check}) to the authentication server 102.

In step S120, the user device 104 can transmit authentication data and an access request to the authentication server 102. The authentication data can be a user ID, a device ID, a password, a biometric measurement, etc. that can prove the identity of the user device 104 or a user of the device. The user device 104 can additionally generate a private, public key pair (dᵤₛₑᵣ, Qᵤₛₑᵣ) and include the public key (Qᵤₛₑᵣ) in the authentication data.

In step S122, the authentication server 102 can authenticate the authentication data and verify that the access request is valid. Once the authentication server 102 successfully authenticates the authentication data and the access request is valid, the authentication server 102 can generate an authorization token. The authentication server 102 can additionally generate a first timecode model using a first base seed. In some embodiments, the first timecode model can be generated using other data such as the authorization token in addition to the base seed. The authorization token can include various information such as a token issuance time, expiration date, issuer information, etc. The authorization token can also be a fully-formed request URL (e.g., HTTP request) used to access the resource. Once generated, the authentication server 102 can further include first timecode model issuance time and/or first timecode model validity time to the authorization token.

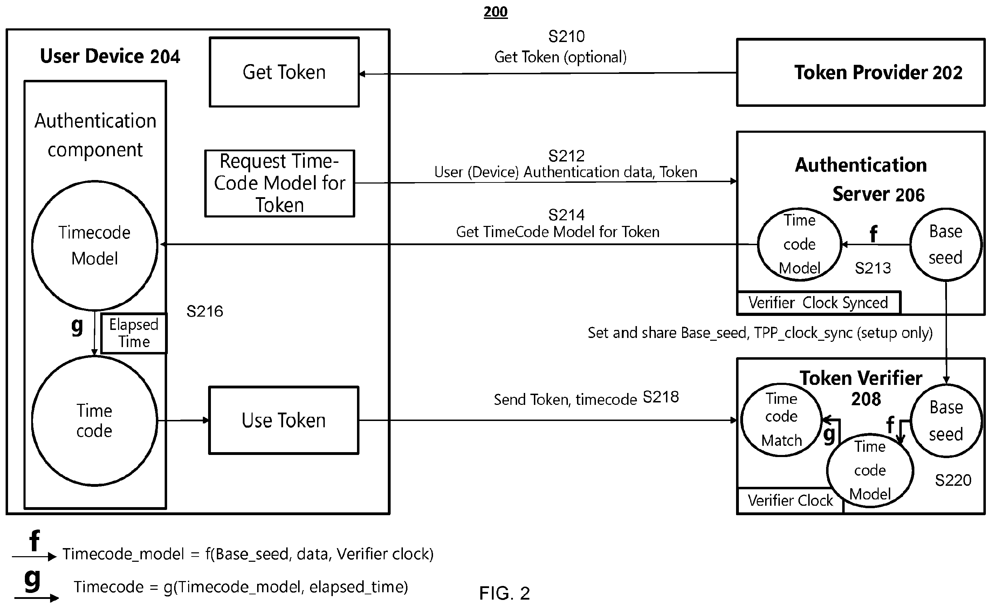

In some embodiments, the user device 104 can have previously issued authorization token (e.g., tokenized PAN). The user device can include the authorization token to the access request when transmitting the authentication data and the access request to the authentication server 102 in step S120. The authentication server 102 can then verify the authorization token in the access request. In some embodiments, the authentication server 102 can use the authorization token to generate the first timecode model. Further descriptions of this flow is described in FIG. 2.

The first timecode model can either be a timecode stream or a timecode seed. Depending on the first timecode model, the first timecode model can be generated in different ways. For example, the authentication server 102 can use the authorization token, the first base seed, and the authorization token's validity time (e.g., start and end time of the token) to generate a first timecode stream. The authentication server 102 can use the authorization token, the first base seed, and a single default time (e.g., unix epoch) to generate a first timecode seed.

The first timecode model can be encrypted using the public key (Qᵤₛₑᵣ), e.g., using asymmetric or symmetric encryption (e.g., Diffie-Hellmann where private key of the authentication server is also used). In some embodiments, the authorization token can also be encrypted, which may be encrypted in the same way or different way as the timecode model.

The first base seed used to generate the first timecode model is independent from a user or token, and can be generated by using the private signing key (d_{sign}) and the public check key (Q_{check}). The private signing key (d_{sign}) can be generated by the authentication server 102 in step S112, and the public check key (Q_{check}) can be received by the authentication server 102 in step S118 from the verification server 106. Further descriptions on the first base seed and the first timecode model are described later.

In step S124, the authentication server 102 can send the authorization token, if generated, and the encrypted first timecode model to the user device 104.

In some embodiments, the authentication server 102 may not generate the first base seed and the first timecode model. Instead, the user device 104 may generate the first base seed and the first timecode model. In such case, the authentication server 102 can send a public check key (Q_{check}) it received from the verification server 106 to the user device 104.

In step S126A, the user device 104 can decrypt the encrypted first timecode model by using the private key (dᵤₛₑᵣ), e.g., using asymmetric or symmetric decryption (e.g., Diffie-Hellmann).

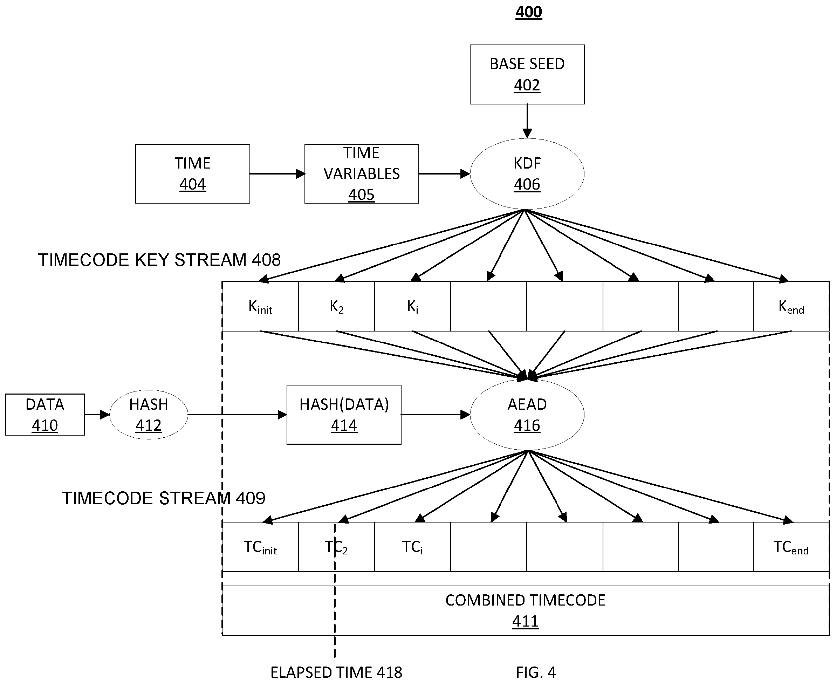

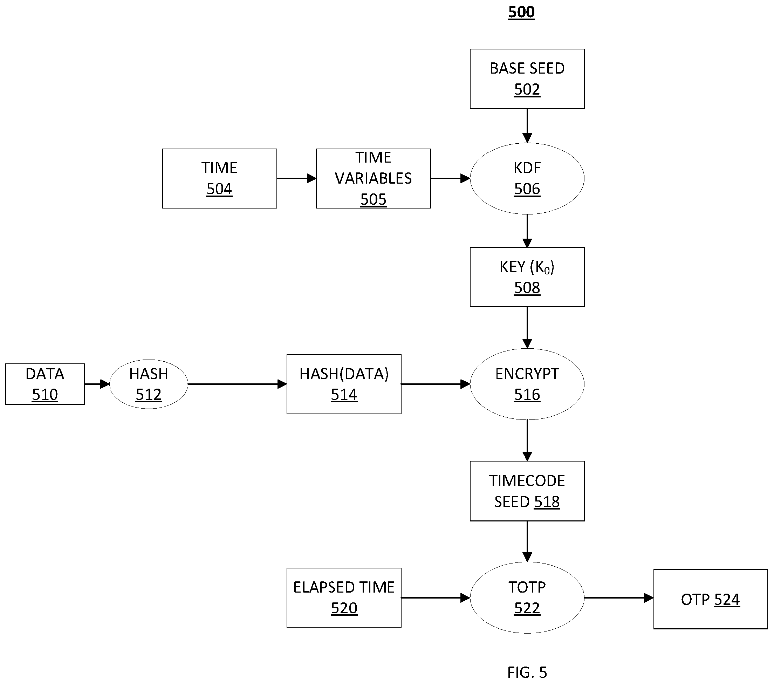

In step S126B, the user device 104 can determine a first elapsed time. The user device 104 can determine the first elapsed time by calculating the time difference between a current time (time in which the user device 104 is sending out the authorization token to the verification server 106) of the user device and a specified time (e.g., authorization token issuance time, first timecode model issuance time, etc.). The user device 104 can additionally use a first clock offset between the user device 104 and the authentication server 102 to calculate more accurate first elapsed time. Further descriptions on the first clock offset is described in **FIG. 4****.** A transport latency between the user device 104 and the verification server 106 can additionally be used to determine the first elapsed time. Further descriptions on the transport latency is described in **FIG. 5****.**

In step S 126C, the user device 104 can determine a first timecode using the first elapsed time and the first timecode model. If the first timecode model is a timecode seed, then the first elapsed time and the timecode seed can be inputted into a time-based one-way function, such as hashing function or other cryptographic function, to produce the first timecode. Alternatively, if the first timecode model is a timecode stream, then the elapsed time can be used to select the first timecode from the timecode stream with no needs for any cryptographic function.

First timecode generation components including the first timecode model, the current time, the first elapsed time, the first timecode, etc. can be stored in an authentication component of the user device's secure enclave. Therefore, when computing the first timecode and the first elapsed time, the time computation can be performed securely from the authentication component in the user device's secure enclave. By doing this, an attacker cannot alter any of the first timecode generation components, giving extra security in generating the first time code.

A timecode can be a non-predictable, real-time-based variable that can be used to authenticate the user device 104 and protect against a replay attack. For example, even if an adversity can capture a timecode, the adversity cannot use the timecode to perform an action (e.g., a transaction) in a resource (e.g., a merchant's web server) because the timecode is a non-predictable and time-based variable which is dependent on the time that the timecode was generated. Therefore, if the adversity sends the captured timecode to the verification server 106, the verification server 106 would notice that the timecode has been generated at a different time, and reject the adversity's action. The process in which the verification server 106 accepts or rejects an action is later described in steps S130 and S132.

In some embodiments, the user device 104 can generate a first timecode model. The user device 104 can generate a private, public signing key pair (d_{sign}, Q_{sign}) similar to step S112 by using a unique ID of the user device 104. Since the user device 104 received the public check key (Q_{check}) from the authentication server in step S124, the user device 104 can generate the first base seed by using the private signing key (d_{sign}) and the public check key (Q_{check}). The user device 104 can then generate the first timecode model using the first base seed. In some embodiments, the first timecode model can be generated using other data such as the authorization token in addition to the base seed.

As examples, the first timecode model can either be a timecode stream or a timecode seed. Depending on the first timecode model, the first timecode model can be generated in different ways. For example, the user device 104 can use the authorization token, the first base seed, and the authorization token's validity time (e.g., start and end time of the token) to generate a first timecode stream. The user device 104 can use the authorization token, the first base seed, and a single default time (e.g., unix epoch) to generate a first timecode seed. Further descriptions on the first base seed and the first timecode model are described later.

The user device 104 can then obtain the first elapsed time, and use the first elapsed time and the first timecode model to generate the first timecode. Additionally, steps S112 and S114 may not be used, as the user device 104 can generate the private, public signing key pair (d_{sign}, Q_{sign}).

In step S128, the authorization token and the first timecode can be transmitted to the verification server 106. In some embodiments, the unique ID of the user device 104 and the public signing key (Q_{sign}) can be additionally sent to the verification server 106.

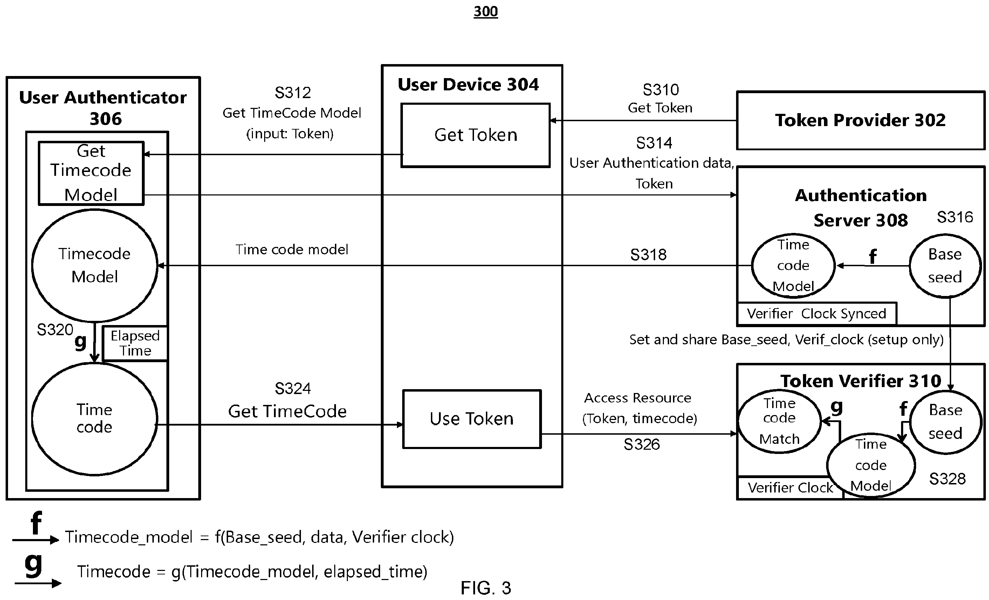

In some embodiments, the user device 104 can have a separate user enclave that sends the authentication data and access request and receives the first timecode model generated by the authentication server 102 for security purposes. The user enclave can generate its own private-public key (d_{user_enc}, Q_{user_enc}), and attach the user enclave public key (Q_{user_enc}) in the authentication data. The user enclave can use the first timecode model to generate a first timecode, and communicate with the user device 104 of the first timecode. Further descriptions of using the user enclave can be seen in FIG. 3.

In step S130A, the verification server can determine a second base seed. The second base seed is independent from a user or token and is generated by using the private check key (d_{check}) and the public signing key (Q_{sign}). The private check key (d_{check}) can be generated by the verification server 106 in step S116, and the public signing key (Q_{sign}) can be received by the verification server 106 in step S114 from the authentication server 102. Since the private/public keys (d_{sign}, Q_{check}) used to generate the first base seed are matching public/private keys (Q_{sign}, d_{check}) used to generate the second base seed, the first base seed will be equal in value to the second base seed.

In step S130B, the verification server 106 can determine a second elapsed time. The verification server 106 can generate a time difference between a current time (time in which the verification server received the authorization token) of the user device and the specified time (e.g., authorization token issuance time, first timecode model generation time, etc.) to determine a second elapsed time. The verification server 106 can also use a second clock offset between the verification server 106 and the authentication server 102 to calculate the second elapsed time. Further descriptions on the second clock offset is described in **FIG. 4****.** An internal latency of the verification server 106 can additionally be used to determine the second elapsed time. Further descriptions on the internal latency is described in **FIG. 5****.** Accounting for the predicted latency, the first clock offset, and the second clock offset, the first elapsed time and the second elapsed time should have equivalent values.

In step S130C, the verification server 106 can generate a second timecode model by using and the second base seed. In some embodiments, the first timecode model can be generated using other data such as the authorization token in addition to the base seed. The second timecode model can either be a timecode stream or a timecode seed. Depending on the second timecode model, the second timecode model can be generated in different ways. For example, the verification server 106 can use the authorization token, the second base seed, the unique ID of the user device 104, and the authorization token's validity time (e.g., start and end time of the token) to generate a second timecode stream. The verification server 106 can use the authorization token, the second base seed, and a single default time (e.g., unix epoch) to generate a second timecode seed. Because the first base seed and the second base seed have equal values, the first timecode model and the second timecode model should be equivalent.

In step S130D, the verification server 106 can determine a second timecode using the second elapsed time and the second timecode model. If the second timecode model is a timecode seed, then the second elapsed time and the timecode seed can be inputted into a time-based one-way function, such as hashing function or other cryptographic function, to produce the second timecode. Alternatively, if the second timecode model is a timecode stream, then the elapsed time can be used to select the second timecode from the timecode stream with no needs for any cryptographic function. The verification server 106 can then verify the first timecode by comparing the first timecode and the second timecode to see if they match.

In step S132, the verification server 106 can match the first timecode and the second timecode, and verify the authorization token. Upon successful match and verification, the verification server 106 can send an access to the user device 104 to perform an action (e.g., a transaction) in a resource (e.g., a merchant's website). The user device 104 can generate new timecodes each time when using the authorization token to receive the access.

### III. VARIATIONS OF TIMECODE FOR REPLAY PROTECTION

A timecode model that can be generated in various other ways. One way is for a user device to send previously issued authorization token to an authentication server, and the authentication server using the previously issued authorization token to generate a first timecode model. Another way is for the user device to have a separate user enclave device that handles a generation of a first timecode. Both of these methods can serve to protect against replay attacks.

FIG. 2 shows a variation of an embodiment having an authentication server using a previously issued authorization token. FIG. 2 comprises a token provider 202, user device 204, an authentication server 206, and a token verifier 208. The user device 204, the authentication server 206, and the token verifier 208 can be the user device 104, the authentication server 102, and the verification server 106 of FIG. 1.

In FIG. 2, a public signing key from the authentication server 206 and a public check key from the token verifier 208 may already have been exchanged between the two entities to generate a first base seed and a second base seed. Therefore, steps S112 to S118 of FIG. 1 may have occurred prior to FIG. 2.

In step S210, the token provider 202 can provide an authorization token to the user device 204. The token can be previously issued authorization token that user device 204 received prior to the flow.

In step S212, the user device 204 can transmit authentication data and an access request with the previously issued authorization token to the authentication server 206. The authentication data can be a user ID, a device ID, a password, a biometric measurement, etc. that can prove the identity of the user device 204 or a user of the device. The user device 204 can additionally generate a private, public key pair (dᵤₛₑᵣ, Qᵤₛₑᵣ) and include the public key (Qᵤₛₑᵣ) in the authentication data.

Step S213 can be similar to step S122 of FIG. 1. The authentication server 206 can verify the authorization token in the access request. In some embodiments, the authentication server 206 can use the authorization token to generate the first timecode model.

Steps S214 to S220 can be similar to steps S124 to S130 of FIG. 1 accordingly. The step S214 can correlate to S124, the step S216 can correlate to steps S126A, S126B, and S126C, the step S218 can correlate to step S128, and the step S220 can correlate to steps S130A, S130B, S130C, and S130D. The descriptions of these steps will not be repeated here.

In step S216, first timecode generation components including the first timecode model, the current time, the first elapsed time, etc. can be stored in an authentication component of the user device's secure enclave. Therefore, when computing the first timecode and the first elapsed time, the time computation can be performed securely from the authentication component in the user device's secure enclave. By doing this, an attacker cannot alter any of the first timecode generation components, giving extra security in generating the first time code.

Upon successful match and verification, the token verifier 208 can send an access to the user device 204 to perform an action (e.g., a transaction) in a resource (e.g., a merchant's website). The user device 204 can generate new timecodes each time when using the authorization token to receive the access.

FIG. 3 shows a variation of an embodiment having a user device with a separate user enclave device (user authenticator) that handles a generation of a first timecode. FIG. 3 comprises a token provider 302, user device 304, user authenticator 306, authentication server 308, and a token verifier 310. The user authenticator 306 can be a secure enclave of the user device 304. The user device 304, the authentication server 308, and the token verifier 310 can be the user device 104, the authentication server 102, and the verification server 106 of FIG. 1.

In FIG. 3, similar to FIG. 2, a public signing key (Q_{sign}) from the authentication server 308 and a public check key (Q_{check}) from the token verifier 310 may already have been exchanged between the two entities to generate a first base seed and a second base seed. Therefore, steps S112 to S118 of FIG. 1 may have occurred prior to FIG. 2.

In step S310, the token provider 302 can provide an authorization token to the user device 304. The token can be previously issued authorization token that user device 304 received prior to the flow.

In step S312, the user device 304 can send the previously issued token to the user authenticator 306. In step S314, the user authenticator 306 can transmit authentication data and an access request with the previously issued authorization token to the authentication server 308. The authentication data can be a user ID, a device ID, a password, a biometric measurement, etc. that can prove the identity of the user device 304 or a user of the device. The user authenticator 306 can additionally generate a private, public key pair (d_{user_enclave}, Q_{user_enclave}) and include the public key (Q_{user_enclave}) in the authentication data.

Step S316 can be similar to step S122 of FIG. 1. The authentication server 308 can verify the authorization token in the access request. In some embodiments, the authentication server 308 can use the authorization token to generate the first timecode model. The authentication server 308 can then encrypt the first timecode model using the user enclave public key (Q_{user_enclave}).

In step S318, the authentication server 308 can send the encrypted first timecode model to the user authenticator 306.

In step S320, the user authenticator 306 can decrypt the encrypted first timecode model by using the user enclave private key (d_{user_enclave}), e.g., using asymmetric or symmetric decryption. The user authenticator 306 can then determine a first elapsed time. The determination of the first elapsed time can be similar to step S126B of FIG. 1. The description of the step S126B will not be repeated here. Upon determining the first elapsed time, the user authenticator 306 can determine a first timecode using the first elapsed time and the first timecode model. This can be similar to step S126C of FIG. 1. The description of the step S126C will not be repeated here.

First timecode generation components including the first timecode model, the current time, the first elapsed time, the first timecode, etc. can be stored in the user authenticator 306.. Therefore, when computing the first timecode and the first elapsed time, the time computation can be performed securely from the user authenticator 306. The user authenticator 306 can be a device used by the user device 304 as a secure enclave and can be part of the user device 304. By doing this, an attacker cannot alter any of the first timecode generation components, giving extra security in generating the first time code.

In step S324, the user authenticator 306 can send the first timecode to the user device 304. In step S326, the user device 304 can then send the first timecode and the authorization token to the token verifier 310.

Step S328 can be similar to steps S130A to S130D of FIG. 1. The descriptions of these steps will not be repeated here.

Upon successful match and verification, the token verifier 208 can send an access to the user device 204 to perform an action (e.g., a transaction) in a resource (e.g., a merchant's website). The user device 204 can generate new timecodes each time when using the authorization token to receive the access.

### IV. TIMECODE MODELS

A timecode model (e.g., timecode stream or timecode seed) can be used to generate a timecode. The timecode model can be generated using a base seed and one or more times. In some embodiments, the timecode model can be generated using other data such as the authorization token in addition to the base seed and the one or more times. When generating a timecode base stream, the time can be the timecode model validity time(e.g., start and end time of the timecode model). When generating a timecode seed, the time can be a single default time, i.e. a domain time reference that all servers agree on (e.g., a Unix epoch).

### A. Base seed

A base seed can be generated by using identity keys of a signer, i.e., an entity that generates a first timecode model, and a verifier, i.e., an entity that verifies the generated timecode. Each signer and verifier has unique IDs that are used to generate identity keys, i.e., a private, public ID key pair (d_{id}, Q_{id}). The private, public ID key pair can be obtained by applying the following functions: ${d}_{id} = KDF \left(PRNG,id,context params\right)$ ${Q}_{id} = {d}_{id} ∗ G$

The private ID key (d_{id}) can be generated using a key derivation function (e.g., SHA-256) with inputs of a pseudo random number generator (PRNG), unique ID of a server, and context parameters (e.g., IP address, Mac Address, device fingerprint, etc.). The public ID key (Q_{id}) is generated using an elliptic curve public parameter (G) and the private ID key (d_{id}). The private, public ID key pair (d_{id}, Q_{id}) is unique for each unique IDs. The private, public ID key pair can be generated by using other one-way cryptographic algorithms. The cryptographic algorithms can use a random number generator or a pseudo-random number generator (e.g., cryptographic hash function, block cipher, etc.) to derive the unique private, public check key pair.

The identity keys of the signer server can be used as a private, public signing key pair (d_{sign}, Q_{sign}), and the identity keys of the verifier can be used as a private, public check key pair (d_{check}, Qcheck).

A first base seed can be generated using an elliptic curve based Diffie Hellman (ECDH) with inputs of the private signing key (d_{sign}) and the public check key (Q_{check}). A second base seed can be generated using an ellipitic curve based Diffie Hellman (ECDH) with inputs of the private check key (d_{check}) and the public signing key (Q_{sign}). Since the private/public keys (d_{sign}, Q_{check}) used to generate the first base seed are matching public/private keys (Q_{sign}, d_{check}) used to generate the second base seed, the first base seed will be equal in value to the second base seed. The first base seed (Z₁) and the second base seed (Z₂) can be obtained by applying the following functions: ${Z}_{1} = ECDH \left({d}_{sign}, {Q}_{check}\right)$ ${Z}_{2} = ECDH \left({d}_{check}, {Q}_{sign}\right)$ ${Z}_{1} = {Z}_{2}$

The signer can be an authentication server, and the verifier can be a verification server. The authentication server can generate identity keys, or private, public signing key pair (d_{sign}, Q_{sign}), and send the public signing key (Q_{sign}) to the verification server. The verification server can generate identity keys, or private, public check key pair (d_{check}, Qcheck), and send the public check key (Q_{check}) to the authentication server 102. This is similar to steps S112 to S118 in FIG. 1

The authentication server can generate a first base seed using the private signing key (d_{sign}) and the public check key (Q_{check}). The verification server can generate a second base seed using the private check key (d_{check}) and the public signing key (Q_{sign}). The first base seed and the second base seed will have the same base seed values. Although the first base seed is generated in step S122 for FIG. 1, the first base seed can be generated at any time after obtaining the private singing key (d_{sign}) and the public check key (Q_{check}). For example, the authentication server can generate the first base seed right after receiving the public check key (Q_{check}) in step S118 from the verification server. This also applies for the second base seed.

In some embodiments, the signer can be a user device. In such case, the authentication server does not generate the private, public signing key pair (d_{sign}, Q_{sign}) and the steps S112 and S114 of FIG. 1 are skipped, as the authentication server is not a signer. The user device can generate identity keys, or private, public signing key pair (d_{sign}, Q_{sign}). The authentication server can send the public check key (Q_{check}) to the user device similar to step S124 in FIG. 1. The user device can then generate a first base seed using the private signing key (d_{sign}) and the public check key (Q_{check}). The user device can then send the public signing key (Q_{sign}) to the verification server similar to step S128 of FIG. 1. The verification server, upon receiving the public signing key (Q_{sign}) can generate the second base seed using the private check key (d_{check}) and the public signing key (Q_{sign}), similar to step S130A of FIG. 1.

In some other embodiments, a base seed can be generated by a third entity, and stored in a vault shared by the signer and the verifier. In such case, the signer and the verifier does not need to generate or exchange private, public keys, and fetch the base seed to generate timecode models.

### B. Timecode Stream

A timecode model can be a timecode stream. The timecode stream can be a sequence of unique timecodes generated at regular intervals. For example, a timecode stream can comprise of ten unique timecodes, each with a period of 10 milliseconds, and the timecode stream can have a period of 100 milliseconds. Another example is where a time code is a sequence of N bits within a timecode stream of size P bits, where P is larger than N. The time code sequence starts at the bit rank T of the timecode stream, stating from the left, where T corresponds to an elapsed time between the reception or the time code model and the current time, and assuming that each bit is corresponds to an elapsed time unit, e.g. 10 milliseconds. The timecode stream can be used in a time sensitive protocol to protect against a replay, as the timecode stream will output different timecodes for different times. Therefore, even if an adversity captures a timecode sent from a first server that authenticates itself to a second server by using the timecode, by the time the adversity reuses the timecode to authenticate itself to the second server, the second server does not authenticate the adversity as the time adversity uses the timecode is different than the time the first server uses the timecode.

FIG. 4 shows a flow diagram of generating a timecode stream 409. A base seed 402 and a time 404 can be used by a key derivation function (KDF) 406 to generate a timecode key stream 408. The timecode key stream 408 and a hashed data 414 can be encrypted using an authenticated encryption (AEAD) to generate the timecode stream 409. FIG. 4 shows one variation of deriving a timecode stream. The timecode stream can be derived in many other ways with different complexities.

The time 404 can be a timecode model validity time. The timecode model validity time can be a period of time in which the timecode model is valid for. The timecode model is valid starting at the start time (tᵢₙᵢₜ) and ends at the end time (t_{end}). After the end time (t_{end}), the timecode model may no longer valid for authentication. In some embodiments, the authorization token validity time can be used in building timecode model validity time. For example, for authorization token with short validity time, the end time of the authorization token validity time can be used as the end time (t_{end}) of the timecode model validity time, as any authorization after the authorization token expires should not be valid. In some instances, the timecode model validity time can have the authorization token validity time.

In some embodiments, the timecode model validity time can be inserted to the authorization token after the generation of the first timecode model. By doing this, the verification server would have the timecode model validity time for generating the second timecode model.

The time variables 405 can consist of a period (p), a period counter (i), and a timecode version counter (v). The period (p) can be a time between clock ticks, or a length of time in one timecode. The timecode version counter (v) can be a technology version counter of the timecode model. The time 404 and the period (p) can be used to generate a period counter (i) that calculates how many timecodes are in between the start time (tᵢₙᵢₜ) and the end time (t_{end}) of the timecode model. For example, one timecode can have a period of 100 milliseconds. Therefore, if the timecode model validity time has a range of 1 second, then there can be 10 timecodes. The period counter (i) can be obtained using the following function: $i = i \left(t\right) = \frac{t - {t}_{init}}{p}$

The time variables 405 consisting of the period counter (i), a timecode version counter (v), and the period (p), and the base seed (K) 402 can be used by the key derivation function (KDF) 406 to generate a timecode key stream 408. The timecode key stream 408 can be obtained by using the following functions: ${K}_{i} = {K}_{i} \left(t\right) = KDF \left(Z,i\left(t\right),p,v\right)$ The period counter (i) indicates the number of keys that will be generated using the key derivation function.

A data 410 can be data (e.g., an authorization token) shared between the verification server, the authentication server, and the user device. The authorization token can include various information such as a token issuance time, expiration date, issuer information, etc. The data 410 can be used in a hash function 412 to output hashed data 414. In some embodiments, the data 410 may not be used, and the timecode key stream 408 can be used as the timecode stream 409.

The hashed data 414 and the plurality of keys of the timecode key stream 408 can go through an authenticated encryption (AEAD) 416 to generate a timecode stream 409. Each key (Kᵢ) in the plurality of keys of the timecode key stream 408 and the hashed data 414 can go through an authenticated encryption (AEAD) 416 to generate a matching timecode (TCᵢ) of the timecode stream 409. For example, a first key (Kᵢₙᵢₜ) in the timecode key stream 408 and the hashed data 414 can go through the authenticated encryption (AEAD) 416 to generate a first timecode (TCᵢₙᵢₜ) of the timecode stream 409. Each timecode (TCᵢ) in the timecode stream 409 can be generated by using the following function: ${TC}_{i} = AEAD \left({K}_{i},Hash\left(Data\right)\right)$ A plurality of timecodes in the timecode stream 409 can be combined into a combined timecode 411. The combined timecode 411 can be a single value long enough to extract a sequence of bits for different timecodes. For example, a timecode can have N bits, and a plurality of A timecodes can be combined to a timecode model of size P bits, where P bits is of length N bits multiplied by A.

The elapsed time 418 can be used to find a matching timecode in the timecode stream 409. For example, in FIG. 4, a timecode TC₂ can be extracted in the timecode stream 409 for the elapsed time 418. The matching timecode can also be a sequence of bits extracted from the combined timecode 411 for the elapsed time 418. For example, the elapsed time 418 in FIG. 4 can be used to extract a sequence of bits from the combined timecode 411 to retrieve the matching timecode (TC₂). Obtaining the matching timecode from the timecode stream 409 or the combined timecode 411 can be implemented without any cryptography.

### C. Timecode Seed

A timecode model can be a timecode seed. The timecode seed can be a unique value generated at a default time (e.g., a Unix epoch). The timecode seed can be used in a time sensitive protocol to protect against a replay, as the timecode seed can be used by a time-based function (e.g., time-based one-time password) along with different times to output different timecodes (e.g., one-time password). Therefore, even if an adversity captures a timecode sent from a first server that authenticates itself to a second server by using the timecode, by the time the adversity reuses the timecode to authenticate itself to the second server, the second server does not authenticate the adversity as the time adversity uses the timecode is different than the time the first server uses the timecode.

FIG. 5 shows a flow diagram of generating a timecode seed 518. A base seed 502 and a time 504 can be used by a key derivation function (KDF) 506 to generate a key 508. The key 508 and a hashed data 514 can be encrypted using an authenticated encryption (AEAD) to generate the timecode seed 518.

The time 504 can be a default start time, i.e., a domain time reference that all servers agree on. For example, the default start time can be a Unix epoch. The time variables 405 consist of a period (p), a period counter (i), and a timecode version counter (v), similar to time variable 405. The period (p) can be a time between clock ticks, or a length of time in one timecode. The timecode version counter (v) can be a technology version counter of the timecode model. The time 404 and the period (p) are used to generate a period counter (i) that calculates how many timecodes. Since the time 504 is not an interval of time, but rather a single default time (t₀), the period counter (i) is calculated to be 0. The period counter (i) can be obtained by using the following functions: $i = i \left({t}_{0}\right) = \frac{{t}_{0} - {t}_{0}}{p} = 0$

The time variables 505 consisting of the period counter (i), a timecode version counter (v), and the period (p), and the base seed (K) 502 are used by the key derivation function (KDF) to generate a single key (K₀) 508 instead of a timecode key stream 408. The single key (K₀) 508 can be obtained by using the following functions: ${K}_{0} = K \left({t}_{0}\right) = KDF \left(Z,i\left({t}_{0}\right),p,v\right)$

A data 510 can be some data such as an authorization token shared between the verification server, the authentication server, and the user device. The authorization token can include various information such as a token issuance time, expiration date, issuer information, etc. The data 510 can be used in a hash function 512 to output hashed data 414. In some embodiments, the data 510 may not be involved in generating the timecode seed 518, and the key 508 can be used as the timecode seed 518.

The hashed data 514 and the single key (K₀) 508 can go through authenticated encryption (AEAD) to generate a timecode seed 518. The timecode seed 518 can be used to generate a unique timecode (e.g., one-time password) only known to the users of the timecode seed 518. The elapsed time 520 and the timecode seed 518 can be used as inputs to an encryption function 522 (e.g., Time Based One Time Password (TOTP)) to generate a unique timecode (e.g., one-time password (OTP)) 524. Different elapsed time 520 will result in different OTP 524.

### V. LATENCIES AND CLOCK OFFSETS

As described above, a first elapsed time can be determined by a user device 104 and a second elapsed time can be determined by a verification server 106. Determining the first elapsed time and the second elapsed time can be represented in steps S126B and S130B respectively. The first elapsed time and the second elapsed time can be determined accurately if an authentication server 102, the user device 104, and the verification server 106 are synchronized with no latencies. However, the authentication server 102, the user device 104, and the verification server 106 clocks may not be synchronized when calculating elapsed time.

### A. Clock Offset and Drift

The user device 104, an authentication server 102, and the verification server 106 clocks may not be synchronized. In such case, a first elapsed time can be different than a second elapsed time, causing a first timecode generated by the user device 104 to have a different value than a second timecode generated by the verification server. For example, if the clocks of the authentication server 102 and the verification server 106 are synchronized, and the user device 104 has a clock that's delayed by an hour, the first elapsed time determined by the user device 104 can be different than the second elapsed time by an hour. Different elapsed times can generate different timecodes, which can result in a failed verification of the user device 104 by the verification server 106, failing to authenticate the user device 104 despite being the correct user device 104.

In order to synchronize the clocks between the user device 104, the authentication server 102, and the verification server 106, a first clock offset and a second clock offset can be determined. The first clock offset can be the clock difference between the user device 104 and the authentication server 102. The second clock offset can be the clock difference between the verification server 106 and the authentication server 102.

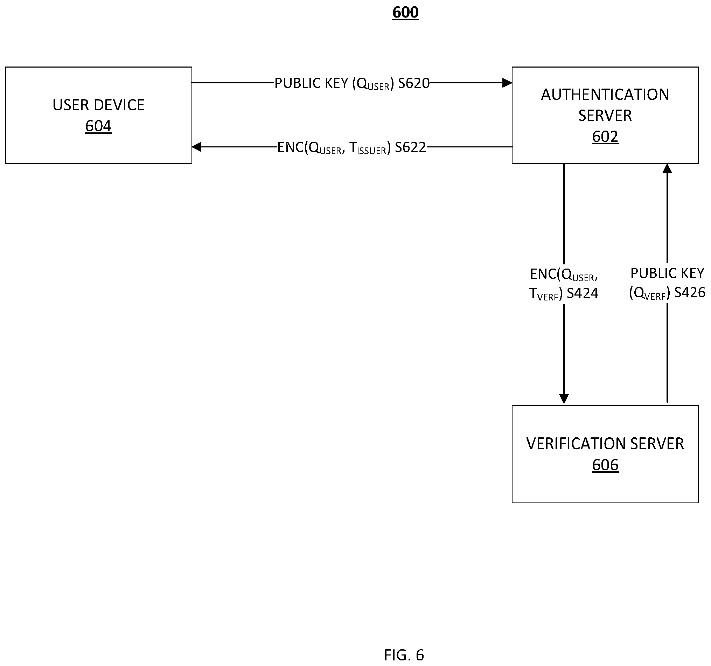

FIG. 6 shows a user device 604, an authentication server 602, and a verification server 606 exchanging encrypted local times to calculate clock offsets. The user device 604, the authentication server 602, and the verification server 606 can be the user device 104, the authentication server 102, and the verification server 106 from FIG. 1. The user device 604 communicates with the authentication server 602, and the verification server 606 communicates with the authentication server 602.

The user device 604 can use a first elapsed time and a first timecode model to generate a first timecode. The user device 604 can calculate the time difference between the current time (time in which the user device 604 is sending out the authorization token to the verification server) of the user device and the specified time (e.g., authorization token issuance time, first timecode model issuance time, etc) to determine the first elapsed time, similar to step S126B of FIG. 1.

However, a local time of the user device 604 and a local time of the authentication server 602 can be different. For example, due to a clock drift, the authentication server 602 can have a clock that has a different time then the user device 604. Therefore, a first clock offset accounts for the difference in local times between the user device 604 and the authentication server 602, and the first clock offset can be used to synchronize clocks of the user device 604 and the authentication server 602.

In step S620, the user device 604 can generate a private, public key pair (dᵤₛₑᵣ, Qᵤₛₑᵣ) and send the public key (Qᵤₛₑᵣ) to the authentication server 602. The user device 604 can additionally send authentication data, an access request, etc. similar to step S120 of FIG. 1. The authentication server 602, upon receiving the public key (Qᵤₛₑᵣ), can encrypt the local time of the authentication server 602 using the public key (Qᵤₛₑᵣ). The authentication server 602 can additionally generate a first timecode model, an authorization token, and etc., and encrypt the first timecode model similar to step S122 of FIG. 1.

In step S622, the authentication server 602 can send the encrypted local time (Enc(Qᵤₛₑᵣ, Tᵢₛₛᵤₑᵣ)) to the user device 604. The authentication server 602 can additionally send the encrypted first timecode model and the authorization token to the user device 604 similar to step S124 of FIG. 1. The user device 604, upon receiving the encrypted local time, can decrypt the encrypted local time using the private key (dᵤₛₑᵣ). The user device 604 can then calculate a first clock offset between the user device 604 and the authentication server 602. The user device 604 can use the first clock offset when calculating the first elapsed time in step S126B of FIG. 1.

The verification server 606 can use a second elapsed time and a second timecode model to generate a second timecode. The verification server 606 can calculate the time difference between the current time (time in which the verification server received the authorization token) of the user device and the specified time (e.g., authorization token issuance time, first timecode model issuance time, etc) to determine the second elapsed time, similar to step S130B of FIG. 1.

However, a local time of the verification server 606 and a local time of the authentication server 602 can be different. For example, due to clock drift, the authentication server 602 can have a clock that has a different time than the verification server 606. Therefore, a second clock offset accounts for the difference in local times between the verification server 606 and the authentication server 602, and the second clock offset can be used to synchronize clocks of the verification server 606 and the authentication server 602.

In step S624, the verification server 606 can send the public key (Q_{verf}) to the authentication server 602. The authentication server 602, upon receiving the public key (Q_{verf}), encrypts the local time of the authentication server 602 using the public key (Q_{verf}).

In step S622, the authentication server 602 can send the encrypted local time (Enc(Q_{verf}, Tᵢₛₛᵤₑᵣ)) to the verification server 606. The verification server 606, upon receiving the encrypted local time, decrypts the encrypted local time using the private key (d_{verf}). The verification server 606 then calculates a second clock offset between the verification server 606 and the authentication server 602. The verification server 606 can use the second clock offset when calculating the second elapsed time in step S130 of FIG. 1.

In some embodiments, the first clock offset can be predicted. The user device 604 can collect first clock offset data of the past, and use machine learning or Gaussian curve to predict the first clock offset of the current time (offset (time = now)) based on following functions that calculate clock offset and drift on some time i and j of the first clock offset data: $Offset \left(i\right) = {T}_{auth , i} - {T}_{user , i}$ $Drift \left(i, j\right) = \frac{Offset \left(i\right) - Offset \left(j\right)}{{T}_{auth , i} - {T}_{auth , j}}$ Once the first clock offset of the current time (offset (time = now)) is predicted, the local time of the authentication server 602 can be predicted using the following function: $Predicted {T}_{auth , now} = {T}_{user , now} + offset \left(t=now\right)$

The second clock offset can be predicted in a similar method as predicting the first clock offset by the verification server 606 collecting second clock offset data. The verification server 606 can collect second clock offset data of the past, and use machine learning or Gaussian curve to predict the second clock offset of the current time (offset (time = now)) based on following functions that calculate clock offset and drift on some time i and j of the second clock offset data: $Offset \left(i\right) = {T}_{auth , i} - {T}_{ver , i}$ $Drift \left(i, j\right) = \frac{Offset \left(i\right) - Offset \left(j\right)}{{T}_{auth , i} - {T}_{auth , j}}$ Once the second clock offset of the current time (offset (time = now)) is predicted, the local time of the authentication server 602 can be predicted using the following function: $Predicted {T}_{auth , now} = {T}_{ver , now} + offset \left(t=now\right)$

### B. Latencies

A user device 104 can send an authorization token and a first timecode to a verification server 106. This is represented in step S128 in FIG. 1. During this process of sending the first elapsed time to the verification server 106, there can be a transport latency between a time the user device 104 sends the first elapsed time and a time the verification server 106 receives the first elapsed time. The transport latency can result in the first elapsed time and a second elapsed time to be different, which can cause a first timecode and a second timecode to be different. Such difference can result in a failed verification of the user device 104 by the verification server 106, failing to authenticate the user device 104 despite being the correct user device 104. Further, when calculating the second elapsed time, the verification server 106 can have its own internal latency due to load and request queue. Therefore, the transport latency and the internal latency of the user device 104 and the verification server 106 can be accounted for when calculating the second elapsed time.

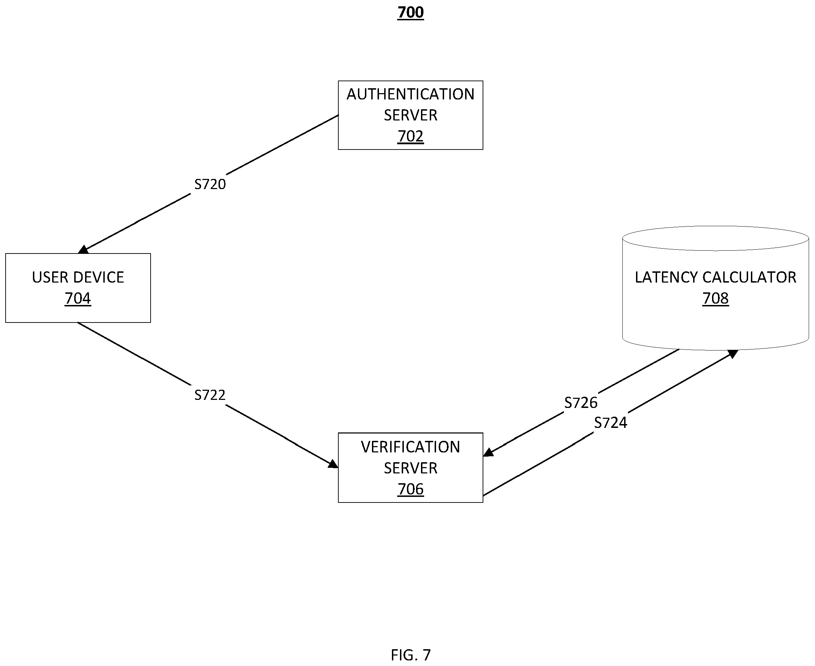

FIG. 7 shows a flow diagram of obtaining latencies. An authentication server 702 can send an authorization token to a user device 704, and the user device 704 can send the authorization token along with time sent to a verification server 706. The user device 704 can predict a transport latency when sending the authorization token to the verification server 706. The verification server 706 can have its own latency calculator 708 to calibrate its own internal latency when computing a second timecode. The latency calculator 708 can be part of the verification server 706. The user device 704, the authentication server 702, and the verification server 706 can be the user device 104, the authentication server 102, and the verification server 106 from FIG. 1.

The user device 704 can generate a first timecode by using a first elapsed time and a first timecode model (e.g., timecode stream or timecode seed). The user device 704 can calculate a time difference between a current time (time in which the user device 104 is sending out the authorization token) of the user device and a specified time (e.g., authorization token issuance time, first timecode model issuance time) to determine a first elapsed time. Similarly, the verification server 706 can generate a second timecode by using a second elapsed time and a second timecode model. The verification server 706 can calculate the time difference between a current time (time in which the verification server received the authorization token) of the user device and the specified time to determine the second elapsed time.

However, the first elapsed time and the second elapsed time can have different time values due to latency. The time sent by the user device 704 (T_{send}) can be different than the time received by the verification server 706 (T_{receive}) due to a transport latency (e.g., rerouting, queueing for resource sharing when traffic is high, etc.). The transport latency can result in a different first timecode and second timecode, which can result in a failed verification by the verification server 706 of the user device 704. Further, when calculating the second elapsed time, the verification server 706 can have its own internal latency due to load and request queue, which can further contribute to difference in first timecode and second timecode. Therefore, when calculating first timecode and the second timecode, all these latencies can be taken account.

In step S720, the authentication server 702 can send the authorization token to the user device 704. The authorization token can include a token issuance time, expiration date, issuer information, etc. The user device 704, upon receiving the authorization token, can calculate a first elapsed time. The first elapsed time can be the time difference between the current local time that the user device 704 sends the authorization token to the verification server 706 and the token issuance time.

In step S722, the user device 704 can send the authorization token along with the first elapsed time to the verification server 706. During this process, the user device 704 can calculated the transport latency between the user device 704 and the verification server 706. The transport latency can be calculated by using ping or measuring delays on the recent transaction flow when simply reaching out to the verification server 706. If the transport latency can be accurately determined due to repeated success, the user device 704 can use this to predict the transport latency and apply to calculation of the first elapsed time.

The verification server 706, upon receiving the authorization token, can calculate a second elapsed time. The second elapsed time is the time difference between the current local time that the verification server 706 received the authorization token and the token issuance time. The verification server 706 can have an internal latency due to load and request queue. Depending on the size of the queue, the internal latency may have different values.

In step S724, the verification server can send the load and request queue size to the latency calculator 708. In step S726, the latency calculator 708, upon receiving the queue size, can calculate the internal latency to the verification server 706. The verification server 706 can then use the internal latency when calculating a second elapsed time. Therefore, when the verification server 706 calculates the second timecode using the second timecode model, the user device 704 can produce exact timecode that accounts for latency

The user device 704 can use the predicted transport latency to calculate the first elapsed time. The user device 704 can then use the first elapsed time to determine a first timecode. The verification server 706 can use the internal latency to calculate the second elapsed time. The verification server 706 can then use the second elapsed time to determine a second timecode.

### VI. EXAMPLE TRANSACTIONS USING TIMECODE FOR REPLAY PROTECTION

Accordingly, a user can access a resource (e.g., a merchant's web service) of a resource provider computer (e.g., a merchant) using a user device (e.g., a mobile phone). The user device may need to verify the user's identity to continue an action (e.g., performing a transaction) in the resource. The user device can provide the user's authentication data such as a payment account number (PAN), card verification value (CVV), etc., to an authorizing entity computer (e.g., an issuer bank). The authorizing entity computer can verify the authenticity of the user by checking the authentication data. Once authenticated, the authorizing entity computer can provide the authorization data (e.g., a payment token) to the user or the user device.

The user device can use the authorization data to perform a transaction with the resource provider computer. The resource provider computer can send the authorization data to a transport computer (e.g., an acquirer bank). The transport computer can verify the authorization token, and verify the transaction. The authorization data can be valid for up to a certain period of time (e.g., four hours), and expire after. When the authorization data expires, the user device can provide the authentication data to the authorizing entity computer again to obtain a new authorization data.

### A. Verification of Transaction using Timecode

During the period of time in which the authorization data is valid, an adversity can perform a replay attack by capturing the authorization data and reusing it. For example, the adversity can capture the authorization data when the user device sends the authorization data to the resource provider computer to verify the transaction. The adversity can use the captured authorization data to perform a transaction during the valid period.

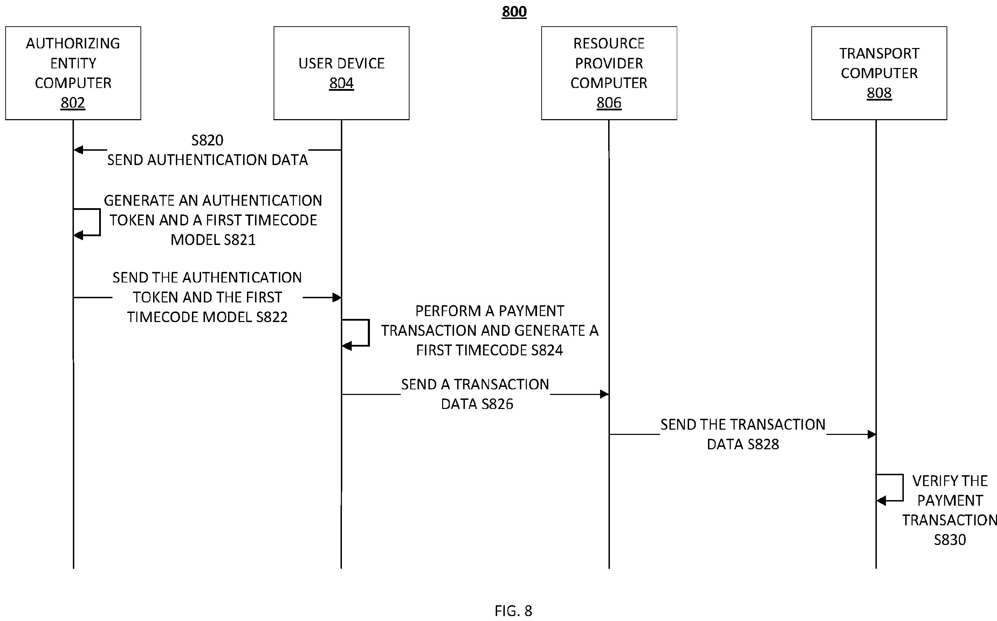

FIG. 8 shows a flow diagram of an embodiment that protects against a replay attack using a timecode for a transaction. FIG. 8 comprises an authorizing entity computer 802 (e.g., issuer bank), a user device 804, a resource provider computer 806 (e.g., merchant), and a transport computer 808 (e.g., acquirer bank).

Keys can be shared between the authorizing entity computer 802 and the transport computer 808, and be used to generate a first base seed for the authorizing entity computer 802 and a second base seed for the transport computer 808 beforehand. In some embodiments, a server computer known both to the authorizing entity computer 802 and the transport computer 808 may provide a base seed to both the authorizing entity computer 802 and the transport computer 808. The clocks of the authorizing entity computer 802, the user device 804, and the transport computer 808 can also be synchronized. A transport latency between the resource provider computer 806 and the transport computer 808 can be predicted beforehand, as well as an internal latency of the transport computer 808.

In step S820, the user device 804 can perform a transaction by providing a user's authentication data such as PAN, acquirer ID, etc. and access request to the authorizing entity computer 802.

In step S821, the authorizing entity computer can authenticate the authentication data. The authorizing entity computer can have a database with the user's authentication data stored, and can authenticate upon correct authentication data. Upon valid authentication, the authorizing entity computer 802 can generate an authorization token using the authentication data. The authorizing entity computer 802 can then generate a first timecode model using the first base seed and the authorization token.

In step S822, the authorizing entity computer 802 can send the first timecode model and the authorization token to the user device 804. The authorization token can include an authorization token's validity time, an expiration date, issuer information, wherein the authorization token's validity time includes an authorization token issuance time.

In step S824, the user device can perform a payment transaction with a resource provider computer 806. At the time when the user device 804 performs the payment transaction, the user device 804 can determine a first elapsed time, or the time difference between the current clock of the user device (the time the user device 804 performs the payment transaction) and the authorization token issuance time. The user device 804 can use the transport latency when calculating the first elapsed time. The user device 804 can then generate a first timecode using the first timecode model and the first elapsed time. The first timecode can be a one-time code uniquely generated by the first timecode model dependent on time (e.g., dynamic crytogram).

In step S826, the user device 804 can send a transaction data including the authorization token and the first timecode to the resource provider computer 806.

In step S828, the resource provider computer 806 can send the transaction data to the transport computer 808.

In step S830, the transport computer 808 can generate a second timecode model using the second base seed and the authorization token. The transport computer 808 can then determine a second elapsed time by calculating the time difference between the current clock of the transport computer 808 (the time the transport computer 808 received the transaction data), the authorization token issuance time, and the internal latency.

The transport computer 808 can generate a second time code (e.g., dynamic cryptogram) using the second timecode model and the second elapsed time. The transport computer 808 can compare the first timecode and the second timecode, and if they match, can verify the payment transaction.

### B. Timecode acting as a dCVV

A timecode can be used to protect user payment against replay by using the timecode as a dynamic CVV, a dynamic code for a payment account. Instead of using a fixed, static CVV code on a payment card, the dynamic code can be generated using a user device that can replace the fixed CVV code. The dynamic CVV code will be time based, in which a different CVV will be generated at different times. By generating a new CVV dependent on time, only users with valid dynamic CVV can use the payment card. Therefore, even if the PAN is intercepted, the dynamic cryptogram can protect users from replay.

In some embodiments, the timecode can be used as a dynamic cryptogram of a payment token. The dynamic cryptogram can also be time based, in which a new dynamic cryptogram is generated at different times. Therefore, even if a payment token is intercepted, the dynamic cryptogram can protect users from replay.

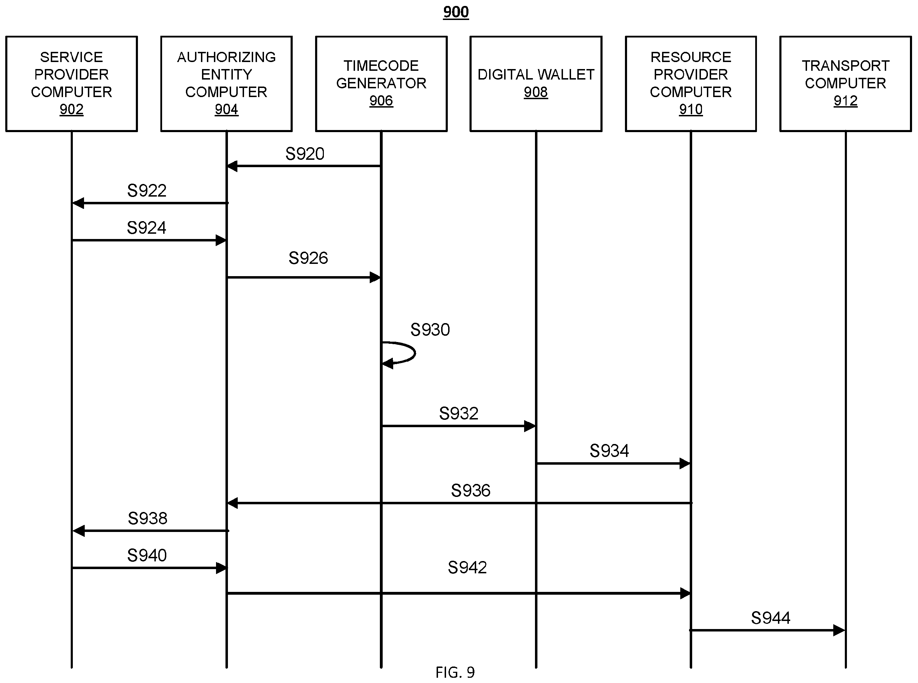

FIG. 9 shows a flow diagram of an alternative embodiment that protects against a replay attack using a timecode as a dCVV for a transaction. FIG. 9 comprises a service provider computer 902, an authorizing entity computer 904, a timecode generator 906, a digital wallet 908, a resource provider computer 910, and a transport computer 912.

The authorizing entity computer 904 can serve as an authentication server (signer) and a verification server (verifier). The timecode generator 906 and the digital wallet 908 are both in a user device, and can be applications in a user device. Clocks of the user device, authorizing entity computer 904 and the transport computer 912 can be synchronized. A transport latency between the authorizing entity computer 904 and the transport computer 912 can be predicted beforehand, and an internal latency of the authorizing entity computer 904 can be calculated beforehand as well.

In step S920, the timecode generator 906 can send payment data including tokenized Primary Account Number (PAN), UserID, etc. to the authorizing entity computer 904. The authorizing entity computer 904 can have a database that stores payment data. If the payment data is stored in the database, the authorizing entity computer 904 can authenticate the payment data.

In step S922, the authorizing entity computer 904 can send the payment data to the service provider computer 902. The service provider computer 902 can have a base seed (e.g., third entity that has a base seed) that can be used to compute a timecode model. The service provider computer 902 can generate a first timecode model (e.g., timecode stream or timecode seed) using the tokenized PAN and the base seed. The tokenized PAN may consist token issuance time, token validity period, etc.

In step S924, the service provider computer 902 can send the first timecode model to the authorizing entity computer 904.

In step S926, the authorizing entity computer 904 can send the first timecode model and the tokenized PAN to the timecode generator 906.

In step S930, when the user device performs a payment transaction, the timecode generator 906 can calculate a time difference between the tokenized issuance time and the current time of when the user device is performing the payment transaction to determine a first elapsed time. The timecode generator 906 can use the transaction latency when determining the first elapsed time. The timecode generator 906 can then generate a first dCVV using the first timecode model and the first elapsed time.

In step S932, the timecode generator 906 can send the first dCVV and the tokenized PANto the digital wallet 908.

In step S934, the digital wallet 908 can send transaction data including the payment data (e.g., tokenized PAN, UserID) and the first dCVV to the resource provider computer 910 to verify the transaction.

In step S936, the resource provider computer 910 can send the transaction data to the authorizing entity computer 904 to verify the transaction.

In step S938, the authorizing entity computer 904 can send the payment data of the transaction data to the service provider computer 902. The service provider computer 902 can generate a second timecode model (e.g., timecode stream or timecode seed) using the tokenized PAN and the base seed.

In step S940, the service provider computer 902 can send the second timecode model and the tokenized PAN to the authorizing entity computer 904. The authorizing entity computer 904 can compute a second elapsed time by calculating the difference in time between the token issuance time and the current time of when the authorizing entity computer 904 received the transaction data. The authorizing entity computer 904 can additionally use the internal latency data when computing the second elapsed time. The authorizing entity computer 904 can then generate a second dCVV using the second elapsed time and the second timecode model. The authorizing entity computer 904 verifies if the second dCVV matches with the first dCVV, and if it verifies, authorizes the payment transaction.

In step S942, the authorizing entity computer 904 can send a message to the resource provider computer 910 that the payment is authorized.

In step S944, the resource provider computer 910 can notify the transport computer 912 that the transaction is authorized.

### VII. EXAMPLE METHOD FOR TIMECODE FOR REPLAY PROTECTION

Methods described herein may be totally or partially performed with a computer system including one or more processors, which can be configured to perform the steps. Thus, embodiments are directed to computer systems configured to perform the steps of any of the methods described herein, potentially with different components performing a respective step or a respective group of steps. The embodiment in FIG. 1 may be carried out using the aspect methods disclosed in greater detail with reference to FIG. 8.

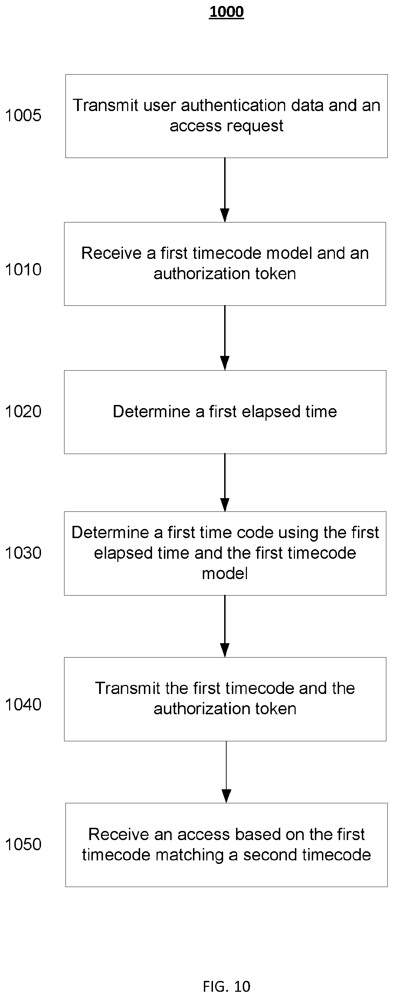

FIG. 10 shows a flowchart corresponding to an embodiment. Method 1000 can be performed by a user device to get an access to an resource (e.g., a merchant's website) by generating a first timecode that could be used to protect against a replay attack.

In step S1005, the user device can transmit user authentication data and an access request to an authentication server. The access request can include a previously issued authorization token. The user authentication data can be a user ID, a device ID, a password, a biometric measurement, etc. that can prove the identity of a user of the user device and access the resource. In some embodiments, the user authentication data can be a fully-formed request URL (e.g., HTTP request). For example, in a merchant's website, the user can log in using a user ID and password. The user ID and password can then be included in the user authentication data and sent to the authentication server. The user device can also generate a private, public key pair (dᵤₛₑᵣ, Qᵤₛₑᵣ) and transmit a user public key (Qᵤₛₑᵣ) to the authentication server. The operation performed in step S1005 may correspond to steps S120.

In step S1010, the user device can receive a first timecode model from the authentication server. The authorization token can be generated or verified by the authentication server using the user authentication data upon the access request being valid. The authorization token can include an authorization token's validity time (which includes an authorization token issuance time), an expiration date, issuer information, first timecode model issuance time, first timecode model validity time, etc. The first timecode model can be generated by the authentication server using the authorization token and a first base seed. The first timecode model may be encrypted using the public key (Qᵤₛₑᵣ) of the user device by the authentication server. The user device may decrypt the encrypted first timecode model by using the user private key (dᵤₛₑᵣ). The operation performed in step S1010 may correspond to steps S124, and S126A.

In step S1020, the user device can determine a first elapsed time. The first elapsed time can be generated by using a current time of the user device, a first clock offset, a transport latency, and the authorization token issuance time. The user device can determine the first elapsed time by calculating the time difference between the current time (time in which the user device is sending out the authorization token to the verification server) of the user device and a specified time (e.g., authorization token issuance time, first timecode model issuance time, etc.). The first clock offset can be a clock difference between the user device and the authentication server, and can be used to synchronize the clocks of the user device and the authentication server when calculating the first elapsed time. The transport latency can be a predicted latency in transmitting the first timecode and the authorization token from the user device to the verification server. The operation performed in step S1020 may correspond to step S126B.

In step S 1030, the user device can determine a first timecode using the first elapsed time and the first timecode model. If the first timecode model is a timecode seed, then the first elapsed time and the timecode seed can be inputted into a time-based one-way function, such as hashing function or other cryptographic function, to produce the first timecode. Alternatively, if the first timecode model is a timecode stream, then the elapsed time can be used to select the first timecode from the timecode stream with no needs for any cryptographic function. The operation performed in step S1030 may correspond to step S126C.

In step S1040, the user device can transmit the first timecode and the authorization token to a verification server. The operation performed in step S1040 may correspond to step S128.

In step S1050, the user device can receive an access to the resource based on the first timecode matching a second timecode. The second timecode can be generated by the verification server using a second timecode model and a second elapsed time. The second timecode model can be generated by the verification server using a second base seed and the authorization token. The second timecode model can be a timecode stream or a timecode seed.

The second elapsed time can be generated by the verification server using the authorization token issuance time, a second clock offset, an internal latency, and a current time of the verification server. The verification server can determine the second elapsed time by calculating the time difference between the current time of the verification server (time in which the verification server is received the authorization token) and the specified time. The second clock offset can be a clock difference between the user device and the verification server, and can be used to synchronize the clocks of the user device and the verification server when calculating the second elapsed time. The internal latency can be a latency in determining the second timecode by the verification server. The operation performed in step S1050 may correspond to step S132.

### VIII. COMPUTER SYSTEM

Any of the computer systems mentioned herein may utilize any suitable number of subsystems. Examples of such subsystems are shown in FIG. 9 in computer system 10. In some embodiments, a computer system includes a single computer apparatus, where the subsystems can be the components of the computer apparatus. In other embodiments, a computer system can include multiple computer apparatuses, each being a subsystem, with internal components. A computer system can include desktop and laptop computers, tablets, mobile phones and other mobile devices.

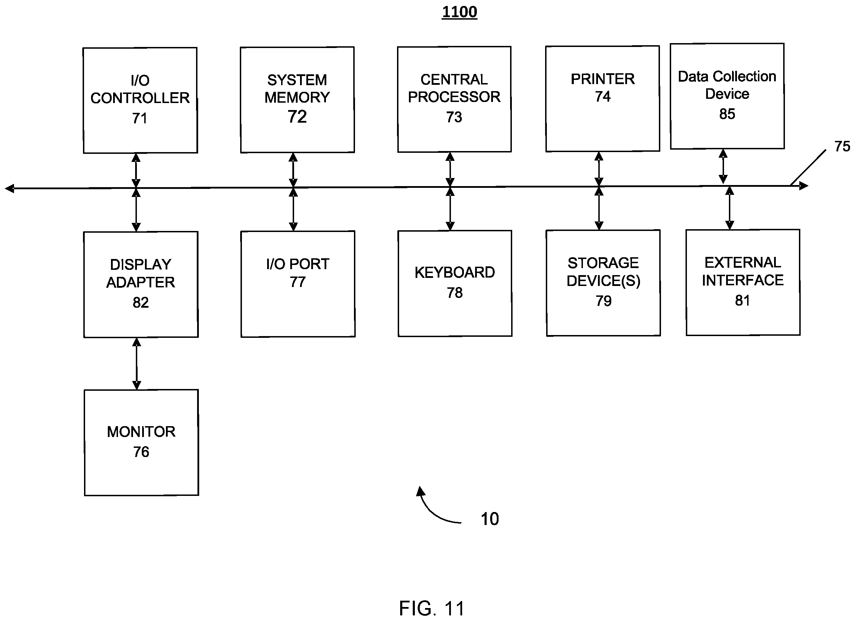

The subsystems shown in FIG. 11 are interconnected via a system bus 75. Additional subsystems such as a printer 74, keyboard 78, storage device(s) 79, monitor 76 (e.g., a display screen, such as an LED), which is coupled to display adapter 82, and others are shown. Peripherals and input/output (I/O) devices, which couple to I/O controller 71, can be connected to the computer system by any number of means known in the art such as input/output (I/O) port 77 (e.g., USB, FireWire^{®}). For example, I/O port 77 or external interface 81 (e.g., Ethernet, Wi-Fi, etc.) can be used to connect computer system 10 to a wide area network such as the Internet, a mouse input device, or a scanner. The interconnection via system bus 75 allows the central processor 73 to communicate with each subsystem and to control the execution of a plurality of instructions from system memory 72 or the storage device(s) 79 (e.g., a fixed disk, such as a hard drive, or optical disk), as well as the exchange of information between subsystems. The system memory 72 and/or the storage device(s) 79 may embody a computer readable medium. Another subsystem is a data collection device 85, such as a camera, microphone, accelerometer, and the like. Any of the data mentioned herein can be output from one component to another component and can be output to the user.

A computer system can include a plurality of the same components or subsystems, e.g., connected together by external interface 81, by an internal interface, or via removable storage devices that can be connected and removed from one component to another component. In some embodiments, computer systems, subsystem, or apparatuses can communicate over a network. In such instances, one computer can be considered a client and another computer a server, where each can be part of a same computer system. A client and a server can each include multiple systems, subsystems, or components.

Aspects of embodiments can be implemented in the form of control logic using hardware circuitry (e.g., an application specific integrated circuit or field programmable gate array) and/or using computer software with a generally programmable processor in a modular or integrated manner. As used herein, a processor can include a single-core processor, multi-core processor on a same integrated chip, or multiple processing units on a single circuit board or networked, as well as dedicated hardware. Based on the disclosure and teachings provided herein, a person of ordinary skill in the art will know and appreciate other ways and/or methods to implement embodiments of the present disclosure using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission. A suitable non-transitory computer readable medium can include random access memory (RAM), a read only memory (ROM), a magnetic medium such as a hard-drive or a floppy disk, or an optical medium such as a compact disk (CD) or DVD (digital versatile disk) or Blu-ray disk, flash memory, and the like. The computer readable medium may be any combination of such devices. In addition, the order of operations may be re-arranged. A process can be terminated when its operations are completed, but could have additional steps not included in a figure. A process may correspond to a method, a function, a procedure, a subroutine, a subprogram, etc. When a process corresponds to a function, its termination may correspond to a return of the function to the calling function or the main function

Such programs may also be encoded and transmitted using carrier signals adapted for transmission via wired, optical, and/or wireless networks conforming to a variety of protocols, including the Internet. As such, a computer readable medium may be created using a data signal encoded with such programs. Computer readable media encoded with the program code may be packaged with a compatible device or provided separately from other devices (e.g., via Internet download). Any such computer readable medium may reside on or within a single computer product (e.g., a hard drive, a CD, or an entire computer system), and may be present on or within different computer products within a system or network. A computer system may include a monitor, printer, or other suitable display for providing any of the results mentioned herein to a user.

Any of the methods described herein may be totally or partially performed with a computer system including one or more processors, which can be configured to perform the steps. Thus, embodiments can be directed to computer systems configured to perform the steps of any of the methods described herein, potentially with different components performing a respective step or a respective group of steps. Although presented as numbered steps, steps of methods herein can be performed at a same time or at different times or in a different order. Additionally, portions of these steps may be used with portions of other steps from other methods. Also, all or portions of a step may be optional. Additionally, any of the steps of any of the methods can be performed with modules, units, circuits, or other means of a system for performing these steps.

The specific details of particular embodiments may be combined in any suitable manner. However, other embodiments of the disclosure may be directed to specific embodiments relating to each individual aspect, or specific combinations of these individual aspects.

The above description of example embodiments of the present disclosure has been presented for the purposes of illustration and description. It is not intended to be exhaustive or to limit the disclosure to the precise form described, and many modifications and variations are possible in light of the teaching above.

A recitation of "a", "an" or "the" is intended to mean "one or more" unless specifically indicated to the contrary. The use of "or" is intended to mean an "inclusive or," and not an "exclusive or" unless specifically indicated to the contrary. Reference to a "first" component does not necessarily require that a second component be provided. Moreover, reference to a "first" or a "second" component does not limit the referenced component to a particular location unless expressly stated. The term "based on" is intended to mean "based at least in part on." When a Markush group or other grouping is used herein, all individual members of the group and all combinations and subcombinations possible of the group are intended to be individually included in the disclosure.

## Claims

1. A method of accessing a resource, the method comprising performing, by a user device (104):
transmitting, to an authentication server (102), authentication data and an access request for the resource, wherein an access to the resource is obtained using an authorization token, wherein the authorization token has a specified time;
receiving, from the authentication server (102), a first timecode model, wherein the first timecode model is generated using a first base seed;
determining a first elapsed time using a current time of the user device (104) and the specified time;
determining a first timecode using the first elapsed time and the first timecode model;
transmitting the first timecode and the authorization token to a verification server (106); and
receiving the access to the resource based on the first timecode matching a second timecode generated by the verification server (106), wherein the second timecode is generated using a second timecode model and a second elapsed time, wherein the second timecode model is generated using a second base seed , and wherein the second elapsed time is determined using the specified time and a current time of the verification server (106).

2. The method of claim 1, further comprising:
transmitting the authorization token to the authentication server (102), wherein the authentication server (102) is configured to use the first base seed to generate the first timecode model.

3. The method of claim 1, wherein the first timecode model is generated using the authorization token and the first base seed, or
wherein the second timecode model is generated using the authorization token and the second base seed.

4. The method of claim 1, wherein the specified time is an issuance time of the first timecode model, or
wherein the specified time is an issuance time of the authorization token.

5. The method of claim 1, wherein the first base seed is generated using a private signing key d_{sign} generated by the authentication server (102) and a public check key Q_{check} generated by the verification server (106), or
wherein the second base seed is generated using a private check key d_{check} generated by the verification server and a public signing key Q_{sign} generated by the authentication server (102).

6. The method of claim 1, wherein the first base seed and the second base seed have equal values.

7. The method of claim 1, wherein the first timecode model and the second timecode model are a timecode stream or a timecode seed.

8. The method of claim 7, wherein the timecode stream is generated by using a base seed and a timecode model validity time, wherein the base seed is either the first base seed or the second base seed, and the timecode model validity time includes the specified time.

9. The method of claim 1, wherein the user device (104) generates a private key dᵤₛₑᵣ and a public key Qᵤₛₑᵣ.

10. The method of claim 9, wherein the user device (104) transmits the public key Qᵤₛₑᵣ to the authentication server (102) with the authentication data and the access request,
wherein the authentication server (102) is configured to encrypt the first timecode model using the public key Qᵤₛₑᵣ to obtain an encrypted first timecode model and
wherein the user device (104) decrypts the encrypted first timecode model using the private key dᵤₛₑᵣ.

11. The method of claim 1, wherein the first elapsed time is determined by using also a first clock offset, wherein the first clock offset is a clock difference between the user device (104) and the authentication server (102).

12. The method of claim 11, wherein the first elapsed time is determined by using also a transport latency, wherein the transport latency is a latency in transmitting the first timecode and the authorization token from the user device (104) to the verification server (106).

13. The method of claim 1, wherein the second elapsed time is determined using also a second clock offset, wherein the second clock offset is a clock difference between the verification server (106) and the authentication server (102).

14. The method of claim 13, wherein the second elapsed time is determined by using also an internal latency, wherein the internal latency is a latency in determining the second timecode by the verification server (106).

15. A user device comprising:
a processor (73);
a network interface (77,81); and
a non-transitory computer-readable medium (72,79) comprising code for instructing the processor (73) to implement the method of any one of claims 1-14.

## Patentansprüche

1. Verfahren zum Zugreifen auf eine Ressource, wobei das Verfahren das Durchführen von Folgendem durch ein Benutzergerät (104) umfasst:
Übertragen von Authentifizierungsdaten und einer Zugriffsanforderung für die Ressource an einen Authentifizierungsserver (102), wobei ein Zugriff auf die Ressource unter Verwendung eines Autorisierungstokens erhalten wird, wobei das Autorisierungstoken eine spezifizierte Zeit aufweist;
Empfangen eines ersten Zeitcodemodells vom Authentifizierungsserver (102), wobei das erste Zeitcodemodell unter Verwendung eines ersten Basissamens erzeugt wird;
Bestimmen einer ersten verstrichenen Zeit unter Verwendung einer aktuellen Zeit des Benutzergeräts (104) und der spezifizierten Zeit;
Bestimmen eines ersten Zeitcodes unter Verwendung der ersten verstrichenen Zeit und des ersten Zeitcodemodells;
Übertragen des ersten Zeitcodes und des Autorisierungstokens an einen Verifizierungsserver (106); und
Empfangen des Zugriffs auf die Ressource basierend auf dem ersten Zeitcode, der mit einem zweiten Zeitcode übereinstimmt, der durch den Verifizierungsserver (106) erzeugt wird, wobei der zweite Zeitcode unter Verwendung eines zweiten Zeitcodemodells und einer zweiten verstrichenen Zeit erzeugt wird, wobei das zweite Zeitcodemodell unter Verwendung eines zweiten Basissamens erzeugt wird und wobei die zweite verstrichene Zeit unter Verwendung der spezifizierten Zeit und einer aktuellen Zeit des Verifizierungsservers (106) bestimmt wird.

2. Verfahren nach Anspruch 1, ferner umfassend:
Übertragen des Autorisierungstokens an den Authentifizierungsserver (102), wobei der Authentifizierungsserver (102) dazu konfiguriert ist, den ersten Basissamen zu verwenden, um das erste Zeitcodemodell zu erzeugen.

3. Verfahren nach Anspruch 1, wobei das erste Zeitcodemodell unter Verwendung des Autorisierungstokens und des ersten Basissamens erzeugt wird, oder
wobei das zweite Zeitcodemodell unter Verwendung des Autorisierungstokens und des zweiten Basissamens erzeugt wird.

4. Verfahren nach Anspruch 1, wobei die spezifizierte Zeit ein Ausgabezeitpunkt des ersten Zeitcodemodells ist, oder
wobei die spezifizierte Zeit ein Ausgabezeitpunkt des Autorisierungstokens ist.

5. Verfahren nach Anspruch 1, wobei der erste Basissamen unter Verwendung eines privaten Signierungsschlüssels d_{sign}, der durch den Authentifizierungsserver (102) erzeugt wird, und eines öffentlichen Prüfschlüssels Qcheck, der durch den Verifizierungsserver (106) erzeugt wird, erzeugt wird, oder
wobei der zweite Basissamen unter Verwendung eines privaten Prüfschlüssels d_{check}, der durch den Verifizierungsserver erzeugt wird, und eines öffentlichen Signierungsschlüssels Q_{sign}, der durch den Authentifizierungsserver (102) erzeugt wird, erzeugt wird.

6. Verfahren nach Anspruch 1, wobei der erste Basissamen und der zweite Basissamen gleiche Werte aufweisen.

7. Verfahren nach Anspruch 1, wobei das erste Zeitcodemodell und das zweite Zeitcodemodell ein Zeitcodestrom oder ein Zeitcodesamen sind.

8. Verfahren nach Anspruch 7, wobei der Zeitcodestrom unter Verwendung eines Basissamens und einer Zeitcodemodell-Gültigkeitszeit erzeugt wird, wobei der Basissamen entweder der erste Basissamen oder der zweite Basissamen ist und die Zeitcodemodell-Gültigkeitszeit die spezifizierte Zeit enthält.

9. Verfahren nach Anspruch 1, wobei das Benutzergerät (104) einen privaten Schlüssel dᵤₛₑᵣ und einen öffentlichen Schlüssel Qᵤₛₑᵣ erzeugt.

10. Verfahren nach Anspruch 9, wobei das Benutzergerät (104) den öffentlichen Schlüssel Qᵤₛₑᵣ mit den Authentifizierungsdaten und der Zugriffsanforderung an den Authentifizierungsserver (102) überträgt,
wobei der Authentifizierungsserver (102) dazu konfiguriert ist, das erste Zeitcodemodell unter Verwendung des öffentlichen Schlüssels Qᵤₛₑᵣ zu verschlüsseln, um ein verschlüsseltes erstes Zeitcodemodell zu erhalten, und wobei das Benutzergerät (104) das verschlüsselte erste Zeitcodemodell unter Verwendung des privaten Schlüssels dᵤₛₑᵣ entschlüsselt.

11. Verfahren nach Anspruch 1, wobei die erste verstrichene Zeit auch unter Verwendung eines ersten Taktversatzes bestimmt wird, wobei der erste Taktversatz eine Taktdifferenz zwischen der Benutzervorrichtung (104) und dem Authentifizierungsserver (102) ist.

12. Verfahren nach Anspruch 11, wobei die erste verstrichene Zeit auch unter Verwendung einer Transportlatenz bestimmt wird, wobei die Transportlatenz eine Latenz beim Übertragen des ersten Zeitcodes und des Autorisierungstokens von der Benutzervorrichtung (104) an den Verifizierungsserver (106) ist.

13. Verfahren nach Anspruch 1, wobei die zweite verstrichene Zeit auch unter Verwendung eines zweiten Taktversatzes bestimmt wird, wobei der zweite Taktversatz eine Taktdifferenz zwischen dem Verifizierungsserver (106) und dem Authentifizierungsserver (102) ist.

14. Verfahren nach Anspruch 13, wobei die zweite verstrichene Zeit auch unter Verwendung einer internen Latenz bestimmt wird, wobei die interne Latenz eine Latenz beim Bestimmen des zweiten Zeitcodes durch den Verifizierungsserver (106) ist.

15. Benutzergerät, umfassend:
einen Prozessor (73);
eine Netzwerkschnittstelle (77, 81); und
ein nichtflüchtiges computerlesbares Medium (72, 79), das Code umfasst, der den Prozessor (73) anweist, das Verfahren nach einem der Ansprüche 1 bis 14 zu implementieren.

## Revendications

1. Procédé d'accès à une ressource, le procédé comprenant l'exécution, par un dispositif utilisateur (104) :
de la transmission, à un serveur d'authentification (102), de données d'authentification et d'une demande d'accès à la ressource, dans lequel un accès à la ressource est obtenu en utilisant un jeton d'autorisation, dans lequel le jeton d'autorisation a un temps spécifié ;
de la réception, de la part du serveur d'authentification (102), d'un premier modèle de code temporel, dans lequel le premier modèle de code temporel est généré en utilisant une première base de départ ;
de la détermination d'un premier temps écoulé en utilisant un temps actuel du dispositif utilisateur (104) et le temps spécifié ;
de la détermination d'un premier code temporel en utilisant le premier temps écoulé et le premier modèle de code temporel ;
de la transmission du premier code temporel et du jeton d'autorisation à un serveur de vérification (106) ; et
de la réception de l'accès à la ressource sur la base du premier code temporel correspondant à un deuxième code temporel généré par le serveur de vérification (106), dans lequel le deuxième code temporel est généré en utilisant un deuxième modèle de code temporel et un deuxième temps écoulé, dans lequel le deuxième modèle de code temporel est généré en utilisant une deuxième base de départ, et dans lequel le deuxième temps écoulé est déterminé en utilisant le temps spécifié et un temps actuel du serveur de vérification (106).

2. Procédé selon la revendication 1, comprenant en outre :
la transmission du jeton d'autorisation au serveur d'authentification (102), dans lequel le serveur d'authentification (102) est configuré pour utiliser la première base de départ pour générer le premier modèle de code temporel.

3. Procédé selon la revendication 1, dans lequel le premier modèle de code temporel est généré en utilisant le jeton d'autorisation et la première base de départ, ou
dans lequel le deuxième modèle de code temporel est généré en utilisant le jeton d'autorisation et la deuxième base de départ.

4. Procédé selon la revendication 1, dans lequel l'heure spécifiée est une heure d'émission du premier modèle de code temporel, ou
dans lequel l'heure spécifiée est une heure d'émission du jeton d'autorisation.

5. Procédé selon la revendication 1, dans lequel la première base de départ est générée en utilisant une clé de signature privée d_{sign} générée par le serveur d'authentification (102) et une clé de contrôle publique Qcheck générée par le serveur de vérification (106), ou
dans lequel la deuxième base de départ est générée en utilisant une clé de vérification privée d_{check} générée par le serveur de vérification et une clé de signature publique Q_{sign} générée par le serveur d'authentification (102).

6. Procédé selon la revendication 1, dans lequel la première base de départ et la deuxième base de départ ont des valeurs égales.

7. Procédé selon la revendication 1, dans lequel le premier modèle de code temporel et le deuxième modèle de code temporel sont un flux de code temporel ou une graine de code temporel.

8. Procédé selon la revendication 7, dans lequel le flux de code temporel est généré en utilisant une base de départ et un temps de validité de modèle de code temporel, dans lequel la base de départ est soit la première base de départ, soit la deuxième base de départ, et le temps de validité de modèle de code temporel comprend le temps spécifié.

9. Procédé selon la revendication 1, dans lequel le dispositif utilisateur (104) génère une clé privée dᵤₛₑᵣ et une clé publique Qᵤₛₑᵣ.

10. Procédé selon la revendication 9, dans lequel le dispositif utilisateur (104) transmet la clé publique Qᵤₛₑᵣ au serveur d'authentification (102) avec les données d'authentification et la demande d'accès,
dans lequel le serveur d'authentification (102) est configuré pour chiffrer le premier modèle de code temporel en utilisant la clé publique Qᵤₛₑᵣ pour obtenir un premier modèle de code temporel chiffré et dans lequel le dispositif utilisateur (104) déchiffre le premier modèle de code temporel chiffré en utilisant la clé privée dᵤₛₑᵣ.

11. Procédé selon la revendication 1, dans lequel le premier temps écoulé est déterminé en utilisant également un premier décalage d'horloge, dans lequel le premier décalage d'horloge est une différence d'horloge entre le dispositif utilisateur (104) et le serveur d'authentification (102).

12. Procédé selon la revendication 11, dans lequel le premier temps écoulé est déterminé en utilisant également une latence de transport, dans lequel la latence de transport est une latence dans la transmission du premier code temporel et du jeton d'autorisation du dispositif utilisateur (104) au serveur de vérification (106).

13. Procédé selon la revendication 1, dans lequel le deuxième temps écoulé est déterminé en utilisant également un deuxième décalage d'horloge, dans lequel le deuxième décalage d'horloge est une différence d'horloge entre le serveur de vérification (106) et le serveur d'authentification (102).

14. Procédé selon la revendication 13, dans lequel le deuxième temps écoulé est déterminé en utilisant également une latence interne, dans lequel la latence interne est une latence dans la détermination du deuxième code temporel par le serveur de vérification (106).

15. Dispositif utilisateur comprenant :
un processeur (73) ;
une interface réseau (77, 81) ; et
un support non transitoire lisible par ordinateur (72, 79) comprenant un code qui ordonne au processeur (73) de mettre en œuvre un procédé selon l'une quelconque des revendications 1 à 14.
